(19) Europäisches Patentamt
European Patent Office
Office européen des brevets

(11) **EP 2 606 655 B1**

(12) **FASCICULE DE BREVET EUROPEEN**

(45) Date de publication et mention de la délivrance du brevet:
**04.06.2014 Bulletin 2014/23**

(51) Int Cl.:
***H04Q 11/00*** *(2006.01)*    ***H04J 14/02*** *(2006.01)*

(21) Numéro de dépôt: **11754710.9**

(22) Date de dépôt: **25.07.2011**

(86) Numéro de dépôt international:
**PCT/FR2011/051787**

(87) Numéro de publication internationale:
**WO 2012/022884 (23.02.2012 Gazette 2012/08)**

(54) **PROCEDE DE COMMUTATION D'UN FLOT DE DONNEES OPTIQUES, PRODUIT PROGRAMME D'ORDINATEUR, MOYEN DE STOCKAGE ET NOEUD CORRESPONDANTS**

VERFAHREN ZUR UMSCHALTUNG EINES OPTISCHEN DATENSTROMS, COMPUTERPROGRAMMPRODUKT SOWIE ZUGEHÖRIGE SPEICHERVORRICHTUNG UND KNOTEN

METHOD FOR SWITCHING AN OPTICAL DATA STREAM, COMPUTER PROGRAM PRODUCT, AND CORRESPONDING STORAGE MEANS AND NODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.08.2010 FR 1056681**

(43) Date de publication de la demande:
**26.06.2013 Bulletin 2013/26**

(73) Titulaire: **Orange**
**75015 Paris (FR)**

(72) Inventeurs:
• **LE ROUZIC, Esther**
  **F-22560 Trébeurden (FR)**
• **GAVIGNET, Paulette**
  **F-22730 Trégastel (FR)**

(74) Mandataire: **Oger, Cyril Pierre**
**Cabinet Vidon**
**Technopôle Atalante**
**16B, rue de Jouanet**
**B.P. 90333**
**FR-35703 Rennes Cedex 7 (FR)**

(56) Documents cités:
**WO-A1-2006/121665    US-A1- 2006 257 145**

• **TANCEVSKI L ET AL: "OPTICAL ROUTING OF ASYNCHRONOUS, VARIABLE LENGTH PACKETS", IEEE JOURNAL ON SELECTED AREAS IN COMMUNICATIONS, IEEE SERVICE CENTER, PISCATAWAY, US, vol. 18, no. 10, 1 octobre 2000 (2000-10-01), pages 2084-2093, XP000976897, ISSN: 0733-8716, DOI: DOI: 10.1109/49.887927**
• **YIJUN XIONG ET AL: "Control Architecture in Optical Burst-Switched WDM Networks", IEEE JOURNAL ON SELECTED AREAS IN COMMUNICATIONS, IEEE SERVICE CENTER, PISCATAWAY, US, vol. 18, no. 10, 1 octobre 2000 (2000-10-01), XP011055242, ISSN: 0733-8716**

**Description**

## 1. DOMAINE DE L'INVENTION

Le domaine de l'invention est celui des réseaux de communication optique.

Plus précisément, l'invention concerne une technique de commutation de données optiques par un noeud compris dans un réseau de communication optique.

L'invention peut s'appliquer à de nombreux réseaux optiques, comme par exemple les réseaux ASON (pour « Automatically Switched Optical Network »), WSON (« Wavelength-Switched Optical Network »), OBS («Optical Burst Switching»), OPS («Optical Packet Switching »), ainsi que les réseaux mettant en oeuvre le protocole GMPLS (pour « Generalized MultiProtocol Label Switching »).

## 2. ARRIÈRE-PLAN TECHNOLOGIOUE

Au cours de ces dernières années, les demandes en bande passante et en qualité de service de plus en plus croissantes par les utilisateurs ont poussé les chercheurs à élaborer de nouvelles architectures et de nouveaux protocoles pour les réseaux de communication optique.

Les systèmes optiques WDM (pour « Wavelength Division Multiplexing ») utilisés dans les réseaux de communication optique classiques ne sont pas capables de traiter de manière optimale les besoins actuels en bande passante du fait notamment de la multiplication du nombre de conversions optique-électronique-optique et opérations de multiplexage/démultiplexage et également du manque de flexibilité dans l'occupation de cette bande passante (granularité élevée, mauvaise occupation de la bande passante).

Afin de répondre aux besoins de bande passante, des architectures de réseaux de communication « tout optique » ont été développées et des techniques de commutation optique appropriées ont été conçues en vue d'exploiter au maximum la bande passante offerte par ces architectures.

On connaît, dans l'état de la technique, différentes techniques classiques de commutation optique : la commutation de circuits optiques, la commutation de paquets optiques et la commutation de rafales optiques.

Les architectures de réseaux optiques mettant en oeuvre la technique de commutation de rafale optique ont été introduites par M. C.M. Qiao et M. J.S. Yoo, dans le document « Optical Burst Switching (OBS) : « A new paradigm for Optical Internet » - Journal of High Speed Networks (JHSN), vol. 8 », pour compenser le manque de flexibilité des réseaux à commutation de circuits optiques et l'immaturité des techniques de commutation de paquets optiques. En effet, la technique de commutation de circuits optiques est relativement simple à implémenter, mais elle souffre d'un manque de flexibilité face à un trafic de données fluctuant et au changement d'état des canaux de communication. La technique de commutation de paquets optiques est, quant à elle, conceptuellement idéale, mais très complexe à mettre en oeuvre car elle nécessite notamment la présence de multiples lignes de retard et un traitement rapide des en-têtes des paquets optiques.

La technique OBS consiste à rassembler une pluralité de paquets de données optiques arrivant à un noeud d'entrée (ou noeud périphérique) du réseau et destinés à un même noeud destinataire du réseau, en un seul groupe de paquets de données, appelé rafale de données optiques, et de router cette rafale jusqu'au noeud destinataire. Des noeuds relais (ou noeuds intermédiaires) permettent de relayer la rafale depuis le noeud d'entrée jusqu'au noeud destinataire.

Contrairement à la technique de commutation de paquets optiques, la technique OBS permet de transmettre plus de données par rafale transitant dans le réseau optique (puisqu'une rafale à elle seule comprend une pluralité de paquets de données optiques), ainsi les contraintes techniques au niveau de chaque noeud du réseau sont allégées compte tenu du nombre moins important d'en-têtes à traiter. En outre, la technique OBS est capable d'utiliser de manière efficace la capacité (en termes de taux d'occupation) des canaux de communication.

Il existe aujourd'hui principalement deux modes de réalisation connus de la technique OBS.

Un premier mode de réalisation connu, appelé OBS à canal de contrôle séparé ou BCP (pour « Burst Control Packet »), repose sur l'envoi préalable d'un paquet de contrôle sur un canal de transport dédié et séparé du canal de transport du flot de données optiques à laquelle il est associé. Les informations contenues dans le paquet de contrôle permettent à un noeud d'un réseau optique de réserver les ressources optiques qui lui sont nécessaires pour router la rafale vers un autre noeud du réseau.

De manière générale, on parle de collision (ou contention) de rafales lorsqu'au moins deux rafales de données optiques empruntent la même longueur d'onde et souhaitent accéder au même port de sortie au même moment.

Un second mode de réalisation connu, appelé OBS à canal de contrôle « in-band » ou OBS à label, consiste à transmettre sur un même canal de transport un label situé en tête du flot de données optiques, ce label contenant les données de contrôle.

Les deux modes de réalisation connus précités (à canal de contrôle séparé et à canal de contrôle « in-band ») implémentent des mécanismes comparables pour la résolution de collision de rafales dans le domaine temporel, spectral et spatial.

La résolution de collisions dans le domaine spectral consiste à modifier la longueur d'onde d'une ou plusieurs des rafales en collision afin que l'ensemble des rafales emprunte un même port de sortie simultanément. Ceci nécessite en particulier que chaque noeud d'un réseau optique soit doté de convertisseurs de longueur d'onde.

Or l'utilisation de tels convertisseurs de longueur d'onde nécessite de mobiliser des ressources électriques non négligeables. Elle limite par ailleurs le degré de transparence des noeuds les implémentant, puisque les mécanismes de conversion mis en oeuvre ne sont pas transparents aux formats de modulation des données utilisant en particulier la phase ou la polarisation. En d'autres termes, aucune technique de conversion actuelle (hormis une conversion optique électronique optique) ne permet de fonctionner avec les données modulées en phase et en polarisation. De ce fait, les noeuds comportant de tels convertisseurs de longueur d'onde ne sont pas totalement transparents pour les données.

En outre, bien qu'une rafale de données optiques ne subisse aucune conversion électronique (la rafale est simplement aiguillée par les noeuds dans le réseau optique), le paquet de contrôle (ou le label) qui lui est associé mobilise néanmoins des ressources en énergie du fait du traitement électronique qui lui est appliqué (conversion optique-électronique-optique, extraction et analyse des données de contrôle, prise de décision...).

Le document intitulé « Optical routing of asynchronous, variable length packets » de M. TANCEVSKI » (1 oct. 2000) présente une technique de routage de paquets optiques dans un réseau optique en vue de réduire les pertes dans l'occupation de la bande passante dues à la présence de paquets de longueurs variables et/ou non-synchrones. Elle repose sur un mécanisme de remplissage de périodes temporelles inoccupées entre deux paquets optiques successifs, par un autre paquet optique, en fonction de la durée de la période inoccupée et de la date de réception desdits paquets. Lorsqu'un paquet optique est reçu par un noeud optique, les données comprises dans l'en-tête qui permettent de réserver les ressources optiques nécessaire au routage, sont extraites du paquet et le paquet est horodaté. L'utilisation d'un en-tête nécessite toutefois l'utilisation d'un certain nombre de moyens matériels pour extraire et analyser les données de contrôle, complexes à mettre en oeuvre et gourmands du point de vue énergétique.

## 3. EXPOSÉ DE L'INVENTION

Dans un mode de réalisation particulier de l'invention, il est proposé un procédé de commutation d'un flot de données optiques par un noeud d'un réseau optique, apte à commuter des données optiques reçues sur des ports d'entrée vers des ports de sortie, le procédé comprenant une étape de gestion de collision comprenant des étapes consistant à, sur détection d'un début de réception d'un flot de données optiques donné sur une longueur d'onde donnée par un port d'entrée donné, le flot donné étant destiné à être traité par une chaîne de traitement donnée comprenant une ligne à retard variable :

- déterminer une ressource du noeud en fonction d'un capteur ayant détecté le flot donné et en fonction d'une politique d'acheminement prédéterminée telle que, pour la longueur d'onde donnée, qui est commune à des noeuds source et destination du flot donné, l'acheminement dans le réseau optique s'effectue selon un arbre de routage couvrant ledit réseau optique et dont une racine est le noeud destination, ladite ressource appartenant à un groupe comprenant un port de sortie et un ensemble de ports d'entrée ;
- consulter une table d'occupation de ladite ressource, ladite table d'occupation indiquant si au moins un éventuel flot précédent utilise ladite ressource ;
- déterminer un retard à appliquer par la chaîne de traitement donnée, pour éviter une collision entre le flot donné et ledit au moins un éventuel flot précédent;
- configurer la ligne à retard variable de la chaîne de traitement donnée, pour qu'elle applique le retard déterminé.

Le principe général de ce mode de réalisation particulier consiste donc à effectuer une analyse de la disponibilité d'une ressource d'un noeud d'un réseau optique dans le cadre d'une commutation d'un flot de données optiques depuis un port d'entrée vers un des ports de sortie, en vue de le router vers un autre noeud du réseau. Cette analyse est fonction d'une politique prédéterminée d'acheminement de flots de données optiques dans ce réseau et permet de déterminer l'occupation de la ressource par au moins un éventuel flot précédent. À partir de cette analyse, un retard à appliquer au flot de données optiques est déterminé de sorte qu'il soit transmis dans une plage temporelle pour laquelle la ressource n'est pas occupée, pour éviter toute collision entre flots de données optiques.

Par flot de données optiques, on entend des données optiques reçues aussi bien sous la forme de paquets de données optiques que de rafales de données optiques.

Ce mode de réalisation particulier de l'invention repose donc sur une approche tout à fait nouvelle et inventive qui ne nécessite pas la présence d'un paquet de contrôle contenant des informations de routage, comme c'est le cas dans l'art antérieur. En effet, selon ce mode de réalisation particulier, le routage (ou l'acheminement) du flot donné est effectué de manière prédéterminée en amont du réseau optique, de sorte que, pour une longueur d'onde donnée commune à des noeuds source et destination du flot donné, l'acheminement dans le réseau s'effectue selon un arbre de routage couvrant le réseau optique et dont une racine est le noeud destination. Ainsi, du fait de l'absence de paquet de contrôle et donc du traitement électronique qui lui est associé, on optimise l'utilisation des ressources en énergie.

Par ailleurs, l'utilisation d'un mécanisme de gestion locale des collisions temporelles permet d'éviter une gestion globale des collisions en amont par les noeuds du réseau qui nécessiterait une coopération complexe entre les noeuds sources d'un même arbre ainsi qu'une synchronisation temporelle précise entre ces noeuds.

En outre, l'utilisation d'une politique d'acheminement basée sur des arbres de routage permet d'effectuer une gestion en amont des collisions en longueur d'onde, ce qui évite en particulier l'utilisation de convertisseurs en longueur d'onde au sein des noeuds du réseau optique. L'absence de tels convertisseurs permet donc de réduire la consommation électrique des noeuds.

Selon une première mise en oeuvre particulière, la ressource étant un port de sortie, l'étape consistant à déterminer le retard comprend des étapes consistant à :

- obtenir au moins une information d'occupation à partir de la table d'occupation, indiquant si le port de sortie déterminé est libre ou occupé par au moins un éventuel flot précédent, et dans le cas où il est occupé, une date limite d'occupation ;
- prendre une durée nulle pour le retard, si le port de sortie déterminé est libre ;
- déterminer une durée non nulle pour le retard, et telle que le flot donné arrive sur le port de sortie à une date postérieure à la date limite d'occupation, si le port de sortie déterminé est occupé ;
- mettre à jour ladite au moins une information d'occupation, pour indiquer une nouvelle date limite d'occupation.

Ainsi, dans ce premier mode de réalisation, la détermination de la durée de retard à appliquer par la chaîne de traitement donnée est effectuée à l'aide d'informations d'occupation des ports de sortie comprises dans la table d'occupation.

Selon une seconde mise en oeuvre particulière, la ressource étant un ensemble de ports d'entrée, l'étape consistant à déterminer le retard comprend des étapes consistant à :

- vérifier que la ligne à retard variable de la chaîne de traitement associée au capteur ayant détecté le flot donné est libre et la marquer en tant qu'occupée ;
- obtenir au moins une information d'occupation pour chaque ligne à retard variable de chaînes de traitement respectivement associées aux ports d'entrée de l'ensemble, ladite information d'occupation indiquant si la ligne à retard variable est libre ou occupée par au moins un flot précédent ;
- configurer la ligne à retard variable de chaque autre chaîne de traitement libre avec une nouvelle durée égale à la somme d'une durée courante augmentée d'une durée déterminée.

Dans ce second mode de réalisation, la détermination de la durée de retard à appliquer par la chaîne de traitement donnée est effectuée à l'aide d'informations d'occupation des ports d'entrée (ou des lignes à retard reliées à ces ports d'entrée) dans la table d'occupation.

De façon avantageuse, le procédé comprend en outre les étapes consistant à :

- mettre à jour une variable associée à l'arbre de routage en fonction d'une date d'arrivée du flot donné ;
- modifier la table d'occupation de la ligne à retard variable de la chaîne de traitement associée au capteur ayant détecté le flot donné, afin d'indiquer que ladite ligne à retard est libre, ladite modification étant déclenchée à l'issue d'une durée, mesurée à compter de la date d'arrivée du flot donné, et égale à la somme de la valeur de la variable et d'une durée représentant la durée du flot donné ;
- configurer la ligne à retard variable de la chaîne de traitement associée au capteur ayant détecté le flot donné avec la valeur de la variable.

La durée représentant la durée du flot peut être une valeur prédéterminée ou bien une valeur réelle déterminée par détection des instants de début et de fin de réception du flot donné.

Avantageusement, la détection d'un début de réception d'un flot de données optiques donné sur une longueur d'onde donnée par un port d'entrée donné est obtenue par une solution appartenant à un groupe de solutions comprenant la mise en oeuvre d'une détection d'enveloppe et la détection d'un champ délimiteur de début accolé au flot.

De manière préférentielle, la détermination d'une durée non nulle pour le retard comprend une étape consistant à déterminer la durée du flot donné et la détermination de la durée du flot donné est obtenue par la détection d'une fin de réception d'un flot de données optiques donné sur une longueur d'onde donnée par un port d'entrée donné, ladite détection étant elle-même obtenue par une solution appartenant à un groupe de solutions comprenant la mise en oeuvre d'une détection d'enveloppe et la détection d'un champs délimiteur de fin accolé au flot.

Par connaissance de la date de réception du flot donné et par détection de la fin du flot, il est possible de déterminer la durée réelle du flot et donc déterminer, de façon plus précise, le retard qui doit être appliqué par la chaîne de traitement donnée, de telle sorte qu'il n'existe aucune période temporelle non-occupée entre deux flots successifs. En d'autres termes, on optimise l'estimation de la durée d'occupation de la ressource par un flot donné.

Selon une caractéristique avantageuse, le procédé comprend une étape consistant à vérifier que la ligne à retard variable de la chaîne de traitement associée au capteur ayant détecté le flot donné est vide. En cas de vérification positive, l'étape de gestion de collision est effectuée, sinon le flot de données optiques donné est rejeté.

Ceci permet d'éviter une collision de deux paquets dans le noeud, celle-ci conduisant à la perte des deux paquets. Un des deux paquets est ainsi sauvegardé.

Dans un autre mode de réalisation de l'invention, il est proposé un produit programme d'ordinateur qui comprend des instructions de code de programme pour la mise en oeuvre du procédé précité (dans l'un quelconque de ses différents modes de réalisation), lorsque ledit programme est exécuté sur un ordinateur.

Dans un autre mode de réalisation de l'invention, il est proposé un moyen de stockage lisible par ordinateur, stockant un programme d'ordinateur comprenant un jeu d'instructions exécutables par un ordinateur pour mettre en oeuvre le procédé précité (dans l'un quelconque de ses différents modes de réalisation).

Dans un autre mode de réalisation de l'invention, il est proposé un noeud d'un réseau optique, apte à commuter des données optiques reçues sur des ports d'entrée vers des ports de sortie et comprenant des moyens de gestion de collision eux-mêmes comprenant les moyens suivants, activés sur détection d'un début de réception d'un flot de données optiques donné sur une longueur d'onde donnée par un port d'entrée donné, le flot donné étant destiné à être traité par une chaîne de traitement donnée comprenant une ligne à retard variable :

- des moyens pour déterminer une ressource du noeud en fonction d'un capteur ayant détecté le flot donné et en fonction d'une politique d'acheminement prédéterminée telle que, pour la longueur d'onde donnée, qui est commune à des noeuds source et destination du flot donné, l'acheminement dans le réseau optique s'effectue selon un arbre de routage couvrant ledit réseau optique et dont une racine est le noeud destination, ladite ressource appartenant à un groupe comprenant un port de sortie et un ensemble de ports d'entrée ;
- des moyens pour consulter une table d'occupation de ladite ressource, ladite table d'occupation indiquant si au moins un éventuel flot précédent utilise ladite ressource ;
- des moyens pour déterminer un retard à appliquer par la chaîne de traitement donnée, pour éviter une collision entre le flot donné et ledit au moins un éventuel flot précédent;
- des moyens pour configurer la ligne à retard variable de la chaîne de traitement donnée, pour qu'elle applique le retard déterminé.

Selon une caractéristique avantageuse, le noeud comprend les moyens suivants, activés sur détection d'une demande de transmission vers un noeud destination d'un flot de données local pour lequel le noeud local est aussi noeud source:

- des moyens pour déterminer le port de sortie à utiliser pour la rafale locale, en fonction de ladite politique de commutation prédéterminée ;
- des moyens d'obtention d'au moins une information d'occupation, indiquant si le port de sortie déterminé est libre ou occupé par au moins une rafale précédente, et dans le cas où il est occupé, une date limite d'occupation ;
- des moyens pour déterminer une plage temporelle dans laquelle le port de sortie déterminé est libre pour transmettre la rafale locale, en fonction de ladite au moins une information d'occupation ;
- des moyens pour mettre à jour ladite au moins une information d'occupation, pour indiquer une nouvelle date limite d'occupation postérieure tenant compte d'une réservation du port de sortie déterminé pendant ladite plage temporelle ;
- des moyens pour insérer le flot local sur ledit port de sortie déterminé, pendant ladite plage temporelle.

Avantageusement, pour la détection d'un début de réception d'un flot de données optiques donné sur une longueur d'onde donnée par un port d'entrée donné, le noeud comprend des moyens pour détecter une enveloppe et/ou des moyens pour détecter un champ délimiteur de début accolé au flot.

Dans un autre mode de réalisation de l'invention, il est proposé un système de commutation de flots de données optiques dans un réseau optique comprenant une pluralité de noeuds, chacun étant apte à commuter des données optiques reçues sur des ports d'entrée vers des ports de sortie, le système comprenant, pour chaque noeud de ladite pluralité, des moyens de gestion de collision comprenant les moyens suivants, activés sur détection d'un début de réception d'un flot de données optiques donné sur une longueur d'onde donnée par un port d'entrée donné, le flot donné étant destiné à être traité par une chaîne de traitement donnée comprenant une ligne à retard variable :

- des moyens pour déterminer une ressource dudit nœud en fonction d'un capteur ayant détecté le flot donné et en fonction d'une politique d'acheminement prédéterminée telle que, pour la longueur d'onde donnée, qui est commune à des nœuds source et destination du flot donné appartenant à ladite pluralité de nœuds, l'acheminement dans le réseau optique s'effectue selon un arbre de routage couvrant ledit réseau optique et dont une racine est le nœud destination, ladite ressource appartenant à un groupe comprenant un port de sortie et un ensemble de ports d'entrée ;
- des moyens pour consulter une table d'occupation de ladite ressource, ladite table d'occupation indiquant si au moins un éventuel flot précédent utilise ladite ressource ;
- des moyens pour déterminer un retard à appliquer par la chaîne de traitement donnée, pour éviter une collision entre le flot donné et ledit au moins un éventuel flot précédent;
- des moyens pour configurer la ligne à retard variable de la chaîne de traitement donnée, pour qu'elle applique le retard déterminé.

## 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1 présente la structure schématique d'un nœud relais mettant en oeuvre le procédé de commutation de flots de données optiques, selon un mode de réalisation particulier de l'invention ;
- la figure 2 illustre un exemple de réseau optique dans lequel est mis en oeuvre le procédé de commutation de flots de données optiques, selon un mode de réalisation particulier de l'invention ;
- la figure 3 représente un exemple de diagramme illustrant une méthode de gestion de collisions dans le domaine temporel, par utilisation d'une table d'occupation des ports de sortie, selon une première variante d'un premier mode de réalisation de l'invention ;
- la figure 4 représente un exemple de diagramme illustrant une méthode de gestion de collisions dans le domaine temporel, par utilisation d'une table d'occupation des ports de sortie, selon une deuxième variante du premier mode de réalisation de l'invention;
- la figure 5 représente un exemple de diagramme illustrant une méthode de gestion de collisions dans le domaine temporel, par utilisation d'une table d'occupation des ports de sortie, selon une troisième variante du premier mode de réalisation de l'invention ;
- la figure 6 représente un exemple de diagramme illustrant une méthode de gestion de collisions dans le domaine temporel, par utilisation d'une table d'occupation de lignes à retard, selon un second mode de réalisation de l'invention ;
- la figure 7 représente un organigramme d'un algorithme de mise en oeuvre d'une méthode de détermination de retards variables dans le cadre du second mode de réalisation de la figure 6 ;
- la figure 8 illustre un exemple de ligne à retard variable pouvant être implémentée dans un nœud selon un mode de réalisation particulier de l'invention ;
- la figure 9 présente un organigramme d'un algorithme de mise en oeuvre du procédé de commutation selon un mode de réalisation particulier de l' invention ;
- la figure 10 représente la structure simplifiée d'un nœud de communication mettant en oeuvre le procédé de commutation selon l'invention.

## 5. DESCRIPTION DÉTAILLÉE

Sur toutes les figures du présent document, les éléments et étapes identiques sont désignés par une même référence numérique.

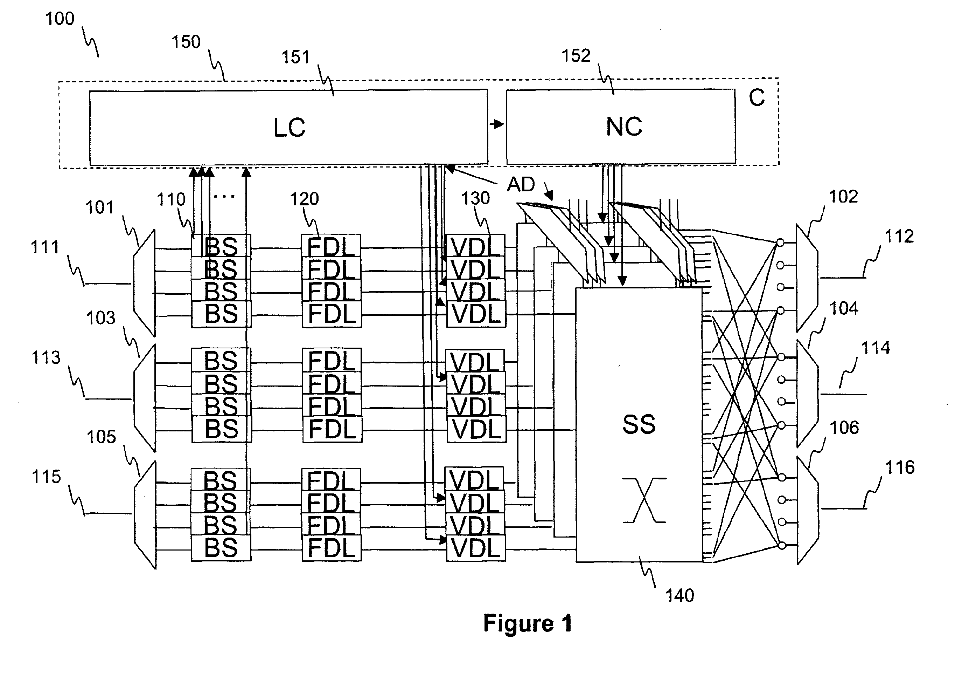

La **figure 1** présente la structure schématique d'un nœud relais 100 mettant en oeuvre le procédé de commutation de flots de données optiques, selon un mode de réalisation particulier de l'invention.

Le nœud relais 100 comprend plus particulièrement :

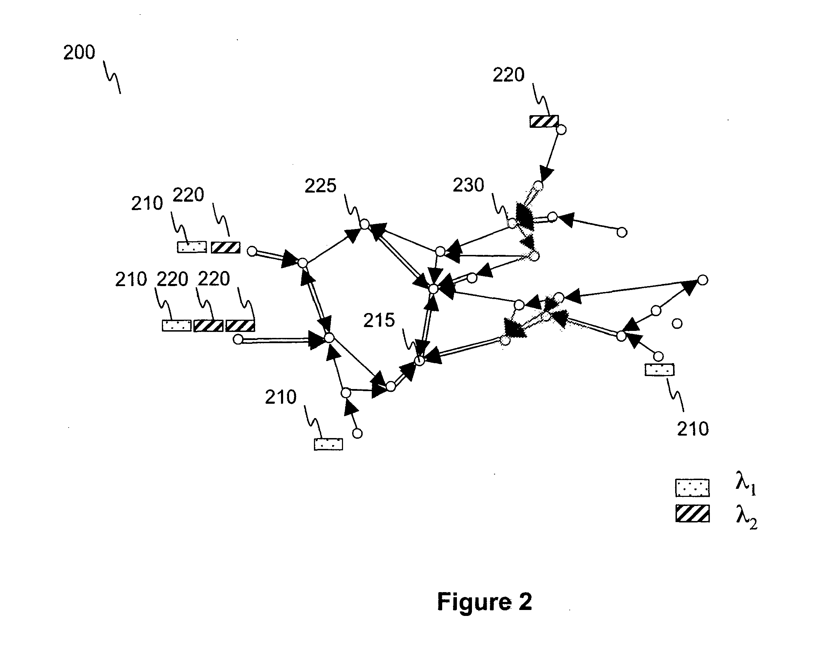

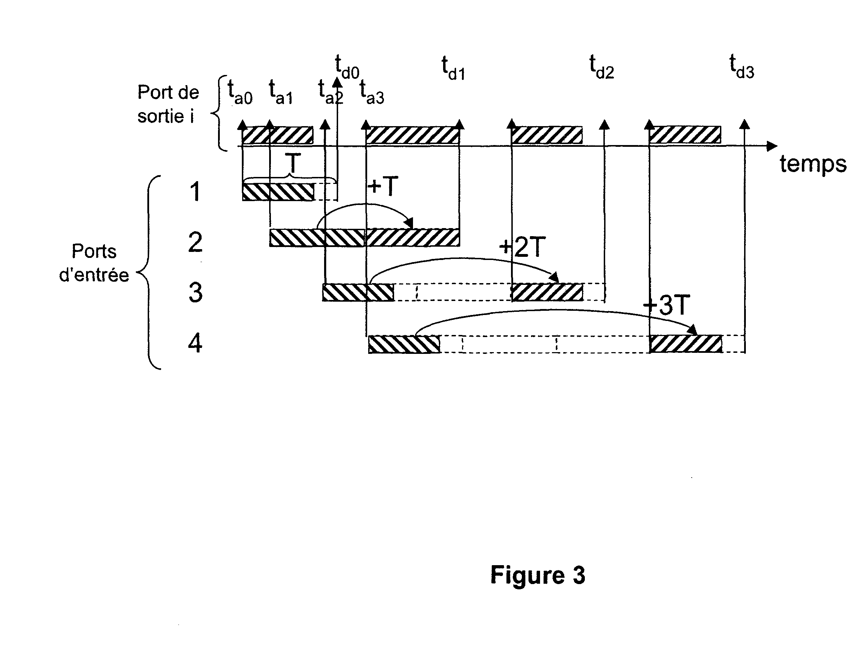

- trois ports d'entrée 111, 113, 115 sur chacun desquels des flots de données optiques sont démultiplexés sur quatre longueurs d'onde différentes grâce aux démultiplexeurs 101, 103, 105 ;
- trois ports de sortie 112, 114, 116, sur chacun desquels viennent se multiplexer les flots de données optiques sur quatre longueurs d'onde différentes grâce aux multiplexeurs 102, 104, 106 ;
- un commutateur optique (noté SS pour « Slow Switch ») 140 interconnectant les ports d'entrée 111, 113, 115 et de sortie 112, 114, 116, pour chacune des quatre longueurs d'onde ;
- un contrôleur 150 lui-même comprenant une unité de contrôle locale (notée LC pour « Local Controller ») 151 chargée de configurer les chaînes de traitement, selon le principe décrit plus loin en relation avec les figures 3 à 7, et une unité de contrôle de réseau (notée NC pour « Network Controller ») 152 chargée de configurer le commutateur optique 140 pour acheminer le flot de données optiques sur le port de sortie déterminé, selon le principe illustré ci-après en relation avec les figures 1 et 2.

Le noeud 100 comprend en outre, pour chaque port d'entrée 111, 113, 115 et pour chaque longueur d'onde, une chaîne de traitement qui comprend elle-même :

- un capteur de détection de flot de données optiques (noté BS pour « Burst Sensor ») 110 chargé de détecter l'arrivée d'un flot de données optiques sur une longueur d'onde donnée ;
- une ligne à retard fixe (notées FDL pour « Fixed Delay Line ») 120 destinée à appliquer un retard de durée fixe prédéterminée au flot de données optiques en cours de traitement et fonction de ce temps de traitement ;
- une ligne à retard variable (notée VDL pour « Variable Delay Line ») 130 destinée à appliquer un retard de durée variable au flot de données optiques en cours de traitement pour gérer la contention éventuelle qui peut survenir entre deux ou plusieurs flots de données.

Sur détection d'un flot de données optiques par un des capteurs de détection 110 du noeud 100, le contrôleur 150 déclenche un compteur dans l'unité de contrôle locale 151 et une analyse de la disponibilité des ressources du noeud pour acheminer le flot de données optiques. Il convient de noter que ces ressources peuvent être un des ports de sortie selon un mode de réalisation décrit plus loin ou l'ensemble des lignes à retard variable VDL des chaines de traitement qui ont en commun un même port de sortie du fait de la configuration préalable du commutateur 140 selon un autre mode de réalisation. Pour ce faire, le contrôleur 151 détermine les ressources à utiliser pour retarder (ou supprimer) le flot de données optiques détecté, sachant que le routage est déjà préconfiguré vers un autre noeud du réseau optique, en fonction d'une politique d'acheminement (ou de commutation) préalablement définie (dont le principe est détaillé ci-après en relation avec la figure 2). Cette politique d'acheminement dépend de la longueur d'onde du flot de données optiques détectée, qui est connue par le contrôleur 150 en identifiant le capteur 110 qui a détecté le flot de données optiques.

Une fois les ressources déterminées pour l'acheminement du flot de données optiques, l'unité de contrôle locale 151 calcule une durée de retard qui peut être compris dans un ensemble prédéterminé de valeurs ou variable. Cette durée est à appliquer par la ligne à retard variable 130 de la chaîne de traitement du flot de données optiques pour éviter une éventuelle collision sur le port de sortie associé aux ressources déterminées entre le flot de données optiques en cours de traitement et un ou plusieurs flots de données optiques précédents occupant déjà le port de sortie déterminé ou déjà planifiés sur le port de sortie déterminé.

Il est à noter qu'il existe plusieurs manières, selon la présente invention, de calculer une durée de retard. Plusieurs exemples de calcul sont illustrés plus loin en relation avec les figures 3 à 6.

La détermination des ressources ainsi que le calcul du retard à appliquer par la chaîne de traitement sont des opérations qui sont réalisées pendant que le flot de données optiques est retardé par la ligne à retard fixe 120, par exemple d'une durée de l'ordre de la microseconde. Le retard de cette ligne à retard fixe est prédéterminé notamment en fonction du temps de traitement.

Après avoir appliqué la durée de retard au flot de données optiques, le flot de données optiques est aiguillé sur le port de sortie du commutateur optique 140 configuré lors d'une étape préalable par l'unité de contrôle de réseau 152. Il est important de noter ici que cet aiguillage (ou commutation) n'est pas reconfiguré pour chaque flot de données optiques, mais qu'au contraire, tous les flots de données optiques qui arriveront sur un port d'entrée du commutateur optique 140 seront orientés vers un même port de sortie tant que l'unité de contrôle de réseau 152 ne reconfigure pas les configurations existantes. La politique de configuration du commutateur optique 140 est expliquée en lien avec la figure 2.

Il convient de noter que le contrôleur 150 n'est pas une simple juxtaposition des deux unités de contrôle 151 et 152, puisqu'il faut que la configuration du commutateur 140, réalisée par l'unité de contrôle 152 (selon la politique d'acheminement prédéterminée), puisse être consultée par l'unité de contrôle 151 pour déterminer les ressources dont la disponibilité doit être analysée pour acheminer le flot de données optiques, par exemple le port de sortie vers lequel sera routé le flot de données optiques concerné ou bien l'ensemble des lignes à retard variable VDL des chaînes de traitement qui ont en commun ce même port de sortie. La disponibilité de ces ressources peut par exemple être enregistrée dans une table d'occupation de l'unité de contrôle 151. En outre, l'unité de contrôle 151 doit pouvoir consulter la table d'occupation pour savoir si elle peut insérer un (ou plusieurs) flots de données optiques local (locaux) et, le cas échéant, à quel instant.

La présente invention prévoit avantageusement la possibilité pour le noeud relais de jouer le rôle d'un noeud source afin de transmettre un (ou plusieurs) flots de données optiques local (locaux). Sur détection d'une demande de transmission vers un noeud destination d'un flot de données optiques local en entrée d'un port local (notée AD sur la figure, pour « Add-Drop » en anglais), l'unité de contrôle 151 détermine la longueur d'onde à emprunter pour atteindre la destination puis déduit le port de sortie à utiliser pour le flot de données optiques local, en fonction de la politique d'acheminement préalablement définie, et calcule une plage temporelle dans laquelle le port de sortie déterminé est libre pour insérer le flot de données optiques local sur le port de sortie déterminé. Dans ce cas, l'unité de contrôle 151 bloque simplement toute demande d'insertion qui intervient en dehors des plages temporelles possibles, à charge au client (qui fait ces demandes) de faire un nouvel essai plus tard ou d'abandonner la transmission, ou bien accepte simplement toute demande d'insertion qui intervient dans ces plages temporelles possibles et réserve la plage temporelle ciblée dans les tables d'occupation des ressources.

Une variante consiste à planifier l'insertion des données en fonction des plages temporelles libres (par exemple en mettant les données dans une mémoire tampon (ou « buffer » en anglais) électronique avant leur conversion dans le domaine optique et en réservant la plage temporelle ciblée dans les tables d'occupation des ressources). Il est également prévu de planifier l'insertion de données en fonction de critères de classe de service (CoS). Ainsi, des données de classe de service non prioritaires sont insérées dans des plages temporelles libres.

Le noeud relais 100 représenté sur la figure 1 ne contient que trois ports d'entrée et trois ports de sortie. Le nombre de ports représenté est volontairement limité, à titre de descriptif purement pédagogique, de manière à ne pas surcharger la figure et la description associée mais il peut être étendu de même que le nombre de longueurs d'onde utilisées (la taille des multiplexeurs-démultiplexeurs étant à adapter au nombre souhaité de longueurs d'onde).

La **figure 2** illustre un exemple d'arbres de routage de flots de données optiques couvrant un réseau optique 200, selon un mode de réalisation particulier de l'invention.

Le réseau optique 200 comprend une architecture fondée sur deux arbres de routage, chaque arbre de routage étant associé à une longueur d'onde donnée ($\lambda_1$,), $\lambda_2$). Un noeud source choisit, pour un flot de données optiques donné 210, 220, le noeud destination 215 ou 225 de ce flot de données optiques en sélectionnant la longueur d'onde $\lambda_1$ ou $\lambda_2$ qui lui est associée. Le routage d'un flot de données optiques dans le réseau optique 200 est donc réalisé par le choix de la longueur d'onde ($\lambda_1$, $\lambda_2$) au niveau du noeud source (en amont) et au moyen d'un arbre de routage prédéfini.

Ainsi, pour un noeud relais donné, le port de sortie à utiliser pour un flot de données optiques donné (politique de commutation) est déterminé en fonction de la longueur d'onde utilisée par le noeud source pour émettre le flot de données optiques. Ainsi, pour chaque longueur d'onde $\lambda_1$ ou $\lambda_2$ commune à des noeuds source et destination du flot de données optiques, chaque noeud relais 230 effectue un routage prédéterminé du flot de données optiques au sein d'un arbre de routage couvrant le réseau optique 200 et dont une racine est le noeud destination 215 ou 225.

Contrairement à l'art antérieur, la présente invention ne nécessite pas la mise en oeuvre d'un paquet de contrôle pour chaque flot de données optiques pour contenir des informations sur le routage du flot de données optiques, ni a fortiori de consulter une table de routage à chaque arrivée de flot de données optiques. En effet, selon la présente invention, le routage de chaque flot de données optiques est effectué de manière prédéterminée en amont du réseau optique, par sélection de la longueur d'onde du noeud source en fonction de la longueur d'onde du noeud destination du flot de données optiques. Du fait de l'absence de paquet de contrôle, on évite de mobiliser les ressources en énergie normalement nécessaires pour effectuer le traitement électronique des paquets de contrôle.

Dans un mode de réalisation, seul un champ délimiteur (ou en-tête) destiné à la détection de l'arrivée d'un flot de données optiques par un capteur détecteur 110 doit être présent à l'avant de chaque flot de données optiques.

Dans un autre mode de réalisation, le champ délimiteur n'est pas nécessaire et la détection de l'arrivée d'un flot de données optiques est faite par la détection de l'enveloppe du flot de données optiques. Cet autre mode de réalisation permet également de détecter la fin du flot de données optiques et d'en déduire la durée du flot de données optiques. A titre d'exemple non limitatif, la détection d'enveloppe est réalisée à l'aide d'un amplificateur optique à semi-conducteur (SOA).

En outre, l'utilisation d'une gestion locale des collisions dans le domaine temporel permet d'éviter une gestion globale des collisions par les noeuds sources. Une telle gestion globale des collisions nécessite une coopération entre les noeuds sources, ce qui entraîne des contraintes en termes de synchronisation en temps des noeuds sources par exemple, ou encore de complexité pour la coopération entre les noeuds d'un même arbre.

De plus, l'utilisation de convertisseurs de longueur d'onde, dans l'art antérieur, au sein de chaque noeud du réseau (destinée à effectuer une gestion locale des collisions en longueur d'onde) n'est pas implémentée, ce qui permet de réduire la consommation électrique des noeuds du réseau et de s'affranchir de tous les problèmes de transparence au débit et au format de modulation.

Il convient de noter que ces arbres de routage sont reconfigurables grâce à un plan de commande propre pouvant être mis en oeuvre, dans le réseau optique 200, de façon distribuée ou centralisée. Chaque arbre de routage est construit en fonction des prévisions de croissance des volumes de trafic (telles que des prévisions annuelles par exemple).

À titre d'exemple, la construction des arbres peut avantageusement être réalisée dans le cas d'un plan de commande distribué grâce à l'échange de messages de commande, de synchronisation de topologie par exemple par une extension de type « GMPLS OSPF », et de signalisation par exemple par une extension de type « GMPLS RSVP-TE ». Une requête de raccordement d'un noeud à un arbre existant est traitée en amont par l'unité de contrôle de réseau 152 en calculant la route vers le prochain noeud de raccordement sur la base de la topologie obtenue par l'étape de synchronisation de topologie, puis en initialisant des messages de réservation de ressources dans les noeuds correspondant à cette route. Une requête de création d'un arbre pour l'ajout d'un nouveau noeud dans le réseau 200 est traitée en amont par l'unité de contrôle de réseau 152 en publiant l'arrivée du noeud en question dans le réseau 200 (étape de synchronisation de topologie). Le choix de la (ou les) longueur(s) d'onde associée(s) à ce noeud est alors fait en fonction des autres arbres déjà en service.

On peut noter ici de façon avantageuse que le nombre de noeuds n'est pas forcément inférieur au nombre de longueurs d'onde utilisable dans une fibre optique. En effet, deux arbres associés à la même longueur d'onde peuvent coexister s'ils n'ont aucun lien en commun (c'est-à-dire s'ils n'ont que des noeuds en commun ou bien s'ils n'ont aucun noeud ni de lien en commun). Cette propriété peut être obtenue par la configuration adéquate du commutateur 140, par exemple en configurant les ports d'entrée 111 et 115 vers le port de sortie 114, puis le port d'entrée 113 vers le port de sortie 112.

La **figure 3** représente un exemple de diagramme illustrant une méthode de gestion de collisions dans le domaine temporel, par utilisation d'une table d'occupation des ports de sortie, selon une première variante d'un premier mode de réalisation de l'invention. Dans cette première variante, la durée à appliquer par la ligne à retard variable peut être choisie dans un ensemble de valeurs, multiples d'une durée T représentative de la durée maximale d'un flot de données optiques. À titre illustratif, dans la suite, l'ensemble de valeurs correspond à (0, T, 2T, 3T).

Cette table d'occupation des ports de sortie permet d'indiquer au noeud si le port de sortie déterminé pour un flot de données optiques courant donné, est libre ou occupé par un ou plusieurs flots de données optiques précédents, et dans le cas où il est occupé, une date de fin (ou limite) d'occupation de ce port de sortie.

On note par la suite $T(i,j)$, la table d'occupation du port de sortie i, pour la longueur d'onde j. Dans cet exemple, la table d'occupation $T(i,j)$ contient des dates de début et de fin d'occupation des flots de données optiques.

Lors de l'initialisation du procédé de commutation, la table d'occupation $T(i,j)$ est vide : $T(i,j) = \{\ \}$.

Grâce à la construction des arbres de routage couvrant le réseau optique, le contrôleur local sait que le port de sortie correspondant aux ports d'entrées 1 à 4, pour la longueur d'onde j, est le port de sortie i. Cette connaissance est indépendante de l'arrivée des flots de données optiques et est préalable à toute arrivée de flot de données optiques.

À la date $t = t_{a0}$, le capteur de détection détecte l'arrivée d'un premier flot de données optiques sur la longueur d'onde j du port d'entrée 1. Le contrôleur consulte la table d'occupation $T(i,j)$ qui est vide et en déduit que le port de sortie i est libre. Le contrôleur décide donc de laisser passer le flot de données optiques sans appliquer de retard variable : la durée à appliquer par la ligne à retard variable est donc nulle ($VDL(1,j) = 0$). A noter que la valeur du retard $VDL(i,j)$ correspond au retard sur l'entrée i pour la longueur d'onde j. Le contrôleur met à jour ensuite la table d'occupation en indiquant que le port de sortie i est maintenant occupé pendant la période comprise entre $t_{a0}$ et $t_{d0}$. On obtient la table d'occupation suivante :

$$T(i,j) = \{(t_{a0}, t_{d0})\},\ \text{avec}\ t_{d0} = t_{a0} + T,$$

avec $t_{d0}$ la date de fin d'occupation du premier flot de données optiques, T la durée maximale prédéterminée d'un flot de données optiques (connue par tous les noeuds du réseau) et $t_{a0}$ la date de début de réception du premier flot de données optiques.

À la date $t = t_{a1}$, le capteur de détection 110 détecte l'arrivée d'un deuxième flot de données optiques sur la longueur d'onde j du port d'entrée 2. Le contrôleur consulte la table d'occupation $T(i,j)$ et constate que le port de sortie i est actuellement occupé, mais qu'il sera libre à $t = t_{d0}$. Le contrôleur 150 constate qu'en appliquant un retard égal à T, 2T ou 3T (pouvant être appliqué par la ligne à retard $VDL(2,j)$), le port de sortie i est libre. En effet, la date $t_{a1}$ étant supérieure à la date $t_{a0}$, les dates $t_{a1}+T$, $t_{a1}+2T$ et $t_{a1}+3T$ sont donc chacune supérieure à la date $t_{a0}+T$. Le contrôleur décide avantageusement d'utiliser, parmi les retards T, 2T et 3T, le plus petit des retards disponibles et configure la ligne à retard $VDL(2,j)$ à T. Le contrôleur 150 met à jour ensuite la table d'occupation $T(i,j)$ en indiquant que le port de sortie i est occupé pour la période comprise entre $t_{a1}+T$ et $t_{d1}+T$, avec $t_{d1}+T = t_{a1}+T+T = t_{a1}+2T$ qui correspond à la date de fin d'occupation du deuxième flot de données optiques. On obtient alors la table d'occupation suivante :

$$T(i,j) = \{(t_{a0},t_{a0}+T);(t_{a1}+T,t_{a1}+2T)\}.$$

À la date $t = t_{a2}$, le capteur de détection 110 détecte l'arrivée d'un troisième flot de données optiques sur la longueur d'onde j du port d'entrée 3. Le contrôleur consulte la table d'occupation $T(i,j)$ et constate que le port de sortie i correspondant est actuellement occupé, mais qu'il sera libre à t = $t_{a1}$+2T.

Dans cet exemple, il est à noter que la date $t_{a1}$ survient avant la fin d'occupation du premier flot de données optiques (c'est-à-dire à $t_{a0}$+T). De ce fait, la période de temps ($t_{a1}$+T)-($t_{a0}$+T) est inférieure à la durée maximale T d'un flot de données optiques (puisqu'une réservation du port de sortie i est automatiquement faite pour une durée maximale T). Il n'est donc pas possible de programmer, pour un flot de données optiques donné, une réservation du port de sortie i au cours de la période de temps ($t_{a1}$+T)-($t_{a0}$+T), dite période temporelle de non réservation.

Le contrôleur 150 constate qu'en appliquant un retard égal à 2T ou 3T (pouvant être appliqué par la ligne à retard VDL(3,j)), le port de sortie i est libre. En effet, la date $t_{a2}$ étant supérieure à la date $t_{a1}$, mais inférieure à la date $t_{a1}$+T, les dates $t_{a2}$+2T et $t_{a2}$+3T sont donc chacune supérieures à la durée $t_{a1}$+2T, mais la date $t_{a2}$+T est inférieure à la date $t_{a1}$+2T. Le contrôleur 150 décide d'utiliser, parmi les retards disponibles, le plus petit des retards, soit le retard égal à 2T et configure VDL(3,j) à 2T. Le contrôleur 150 met à jour ensuite la table d'occupation T(i,j) en indiquant que le port de sortie i est occupé pendant la période comprise entre $t_{a2}$+2T et $t_{d2}$+T, avec $t_{d2}$+T = $t_{a2}$+2T +T qui correspond à la date de fin d'occupation du troisième flot de données optiques. On obtient alors la table d'occupation suivante :

$$T(i,j) = \{(t_{a0},t_{a0}+T);(t_{a1}+T,t_{a1}+2T);(t_{a2}+2T,t_{a2}+3T)\}.$$

À la date $t_{d0}$ (fin du premier flot de données optiques), le contrôleur 150 met à jour la table d'occupation T(i,j) en effaçant la réservation qui avait été faite pour le premier flot de données optiques. On obtient alors la table d'occupation suivante :

$$T(i,j) = \{(t_{a1}+T,t_{a1}+2T);(t_{a2}+2T,t_{a2}+3T)\}.$$

Une telle mise à jour permet à un flot de données optiques reçu sur le port d'entrée 1 de pouvoir être transmis sur le port de sortie i (selon la présente méthode de gestion de collisions, en appliquant un retard grâce à la ligne à retard qui s'est libérée). On considère alors que la chaîne de traitement correspondante est vide.

À la date $t_{a3}$, le capteur de détection 110 détecte l'arrivée d'un quatrième flot de données optiques sur la longueur d'onde j du port d'entrée 4.

Il est à noter que, pour les mêmes raisons que précédemment, aucune réservation du port de sortie i ne peut être effectuée dans la période comprise entre $t_{a1}$+2T et $t_{a2}$+2T (période temporelle de non réservation). Le contrôleur 150 est contraint de retarder le flot de données optiques en cours de traitement d'un retard égal à 3T.

Le contrôleur configure la ligne à retard VDL(4,j) à 3T et met à jour la table d'occupation : T(i,J)= $\{(t_{a1}+T,t_{a1}+2T);(t_{a2}+2T,t_{a2}+3T); (t_{a3}+3T,t_{a3}+4T)\}$.

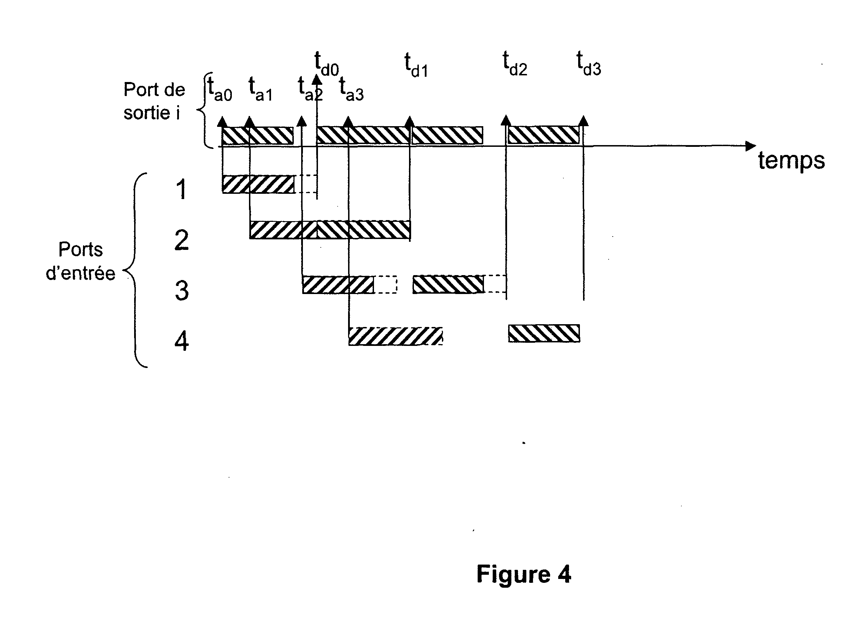

La **figure 4** représente un exemple de diagramme illustrant une méthode de gestion de collisions dans le domaine temporel, par utilisation d'une table d'occupation des ports de sortie, selon une deuxième variante du premier mode de réalisation de l'invention. Dans cette deuxième variante, la durée à appliquer par la ligne à retard variable est ajustable.

À la date $t_{a0}$, le capteur de détection 110 détecte l'arrivée d'un premier flot de données optiques sur le port d'entrée 1 de la longueur d'onde j. Le contrôleur 150 consulte la table d'occupation T(i,j). Par défaut, lors de l'initialisation du procédé de commutation, la table d'occupation T(i,j) est vide : T(i,j) = { }. Le contrôleur 150 en déduit alors que le port de sortie i est libre et laisse donc passer le premier flot de données optiques sans appliquer de retard. Pour ce faire, il configure la ligne de retard correspondant à l'entrée 1 et à la longueur d'onde j à 0 (VDL(1,j)= 0). Le contrôleur 150 met à jour la table d'occupation T(i,j) en indiquant le port de sortie i est occupé pendant la période comprise entre $t_{a0}$ et $t_{d0}$, avec $t_{d0}$ = $t_{a0}$ + T, $t_{d0}$ étant la date de fin d'occupation du premier flot de données optiques, T la durée maximale prédéterminée d'un flot de données optiques et $t_{a0}$ la date de début de réception du premier flot de données optiques. On obtient la table d'occupation suivante : T(i,j) = $\{(t_{a0}, t_{d0})\}$.

À la date t = $t_{a1}$, le capteur de détection 110 détecte l'arrivée d'un deuxième flot de données optiques sur la longueur d'onde j du port d'entrée 2. Le contrôleur 150 consulte la table d'occupation T(i,j) et constate que le port de sortie i est actuellement occupé, mais qu'il sera libre à la date $t_{d0}$. Le contrôleur 150 constate qu'en appliquant un retard égal à $t_{d0}$-$t_{a1}$ (pouvant être appliqué par la ligne à retard VDL(2,j)), le port de sortie i est libre. Le contrôleur 150 configure la ligne à retard VDL(2,j) à $t_{a0}$+T-$t_{a1}$. Le contrôleur 150 met à jour ensuite la table d'occupation T(i,j) en indiquant le port de sortie i est occupé pour la période comprise entre $t_{a1}$+($t_{a0}$+T-$t_{a1}$) et $t_{d1}$, avec $t_{d1}$ = $t_{a1}$+($t_{a0}$+T-$t_{a1}$)+T. On obtient la table d'occupation suivante :

$$T(i,j) = \{(t_{a0}, t_{a0}+T); (t_{a0}+T, t_{a0}+2T)\}.$$

Comme pour la figure 3, le diagramme de la figure 4 montre que des périodes temporelles pour lesquelles aucune réservation du port de sortie i ne peut être programmée subsistent, mais que leur durée est plus petite. En effet, la date limite d'occupation attribuée à un flot de données optiques étant, dans cet exemple, fonction de la durée maximale T (qui ne correspond pas forcément à la durée réelle d'un flot de données optiques), le contrôleur 150 sur-estime la durée nécessaire à la réservation du port de sortie i pour le flot de données optiques donné.

À la date t = $t_{a2}$, le capteur de détection 110 détecte l'arrivée d'un troisième flot de données optiques sur la longueur d'onde j du port d'entrée 3. Le contrôleur consulte la table d'occupation T(i,j) et constate que le port de sortie i est actuellement occupé, mais qu'il sera libre après la date $t_{a0}+2T$. Le contrôleur 150 configure donc la ligne à retard VDL(3,j) avec un retard de durée égale à $t_{d1}-t_{a2}$, soit $t_{a0}+2T-ta_2$. Le contrôleur 150 met à jour ensuite la table d'occupation T(i,j) en indiquant le port de sortie i est occupé pour la période comprise entre ta2+ $(t_{a0}+2T-t_{a2})$ et $t_{d2}$, avec $t_{d2} = t_{a0}+2T+T$. On obtient la table d'occupation suivante :

$$T(i,j) = \{(t_{a0}, t_{a0}+T); (t_{a0}+T, t_{a0}+2T); (t_{a0}+2T, t_{a0}+3T)\}.$$

À la date $t_{d0} = t_{a0}+T$ (fin du premier flot de données optiques), le contrôleur 150 met à jour la table d'occupation T(i,j) en effaçant la réservation qui avait été faite pour le premier flot de données optiques. On obtient alors la table d'occupation suivante :

$$T(i,j) = \{(t_{a0}+T, t_{a0}+2T); (t_{a0}+2T, t_{a0}+3T)\}.$$

À la date t = $t_{a3}$ le capteur de détection 110 détecte l'arrivée d'un quatrième flot de données optiques sur la longueur d'onde j du port 4 d'entrée. Le contrôleur 150 consulte la table d'occupation T(i,j) et constate que le port de sortie i est actuellement occupé, mais qu'il sera libre après la date $t_{a0}+3T$. Le contrôleur 150 configure donc la ligne à retard VDL(4,j) avec un retard de durée égale à $t_{a0}+3T-t_{a3}$. Le contrôleur 150 met à jour ensuite la table d'occupation T(i,j) en indiquant que le port de sortie i est également occupé pour la période comprise entre $t_{a3}+ (t_{a0}+3T-t_{a3})$ et $t_{d3}$, avec $t_{d3} = t_{a0}+3T+T$. On obtient la table d'occupation suivante :

$$T(i,j) = \{(t_{a0}+T, t_{a0}+2T); (t_{a0}+2T, t_{a0}+3T); (t_{a0}+3T, t_{a0}+4T)\}.$$

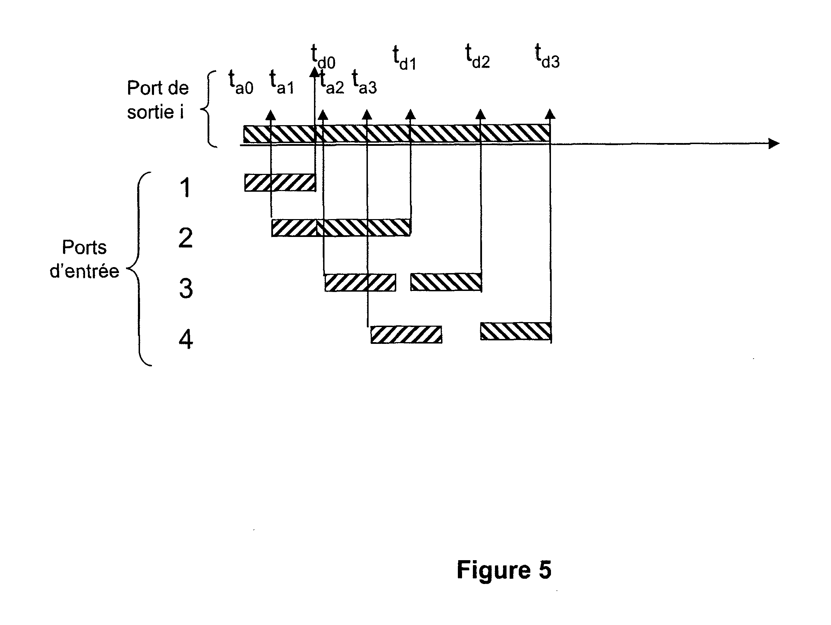

La **figure 5** représente un exemple de diagramme illustrant une méthode de gestion de collisions dans le domaine temporel, par utilisation d'une table d'occupation des ports de sortie, selon une troisième variante du premier mode de réalisation de l'invention. Dans cette troisième variante, la durée à appliquer par la ligne à retard variable est ajustable et la durée réelle du flot de données optiques est prise en compte. Toutefois, les durées de flot de données optiques prises en compte font partie d'un ensemble fini de valeurs.

À la date $t_{a0}$, le capteur de détection 110 détecte l'arrivée d'un premier flot de données optiques sur la longueur d'onde j du port d'entrée 1. Le contrôleur consulte la table d'occupation T(i,j). Par défaut, lors de l'initialisation du procédé de commutation, la table d'occupation T(i,j) est vide : T(i,j) = { }. Le contrôleur 150 en déduit alors que le port de sortie i est libre et laisse donc passer le premier flot de données optiques sans appliquer de retard. Pour ce faire, il configure la ligne de retard correspondant à l'entrée 1 et à la longueur d'onde j à 0 (VDL(1,j) = 0). Le contrôleur 150 met ensuite à jour la table d'occupation T(i,j) en indiquant le port de sortie i est occupé pendant la période comprise entre $t_{a0}$ et $t_{d0}$, avec $t_{d0} = t_{a0} + T1$, $t_{a0}$ étant la date de début de réception du premier flot de données optiques et T1 la durée réelle du premier flot de données optiques. On obtient la table d'occupation suivante :

$$T(i,j) = \{(t_{a0}, t_{d0})\}.$$

À la date t = $t_{a1}$, le capteur de détection 110 détecte l'arrivée d'un deuxième flot de données optiques sur la longueur d'onde j du port d'entrée 2, de durée réelle T2. Le contrôleur 150 consulte la table d'occupation T(i,j) et constate que le port de sortie i est actuellement occupé, mais qu'il sera libre à la date $t_{d0}$. Le contrôleur 150 constate qu'en appliquant un retard égal à $t_{d0}$-$t_{a1}$ au deuxième flot de données optiques, le port de sortie i est libre. Le contrôleur configure la ligne à retard VDL(2,j) à $t_{a0}$+T1-$t_{a1}$. Le contrôleur 150 met à jour ensuite la table d'occupation T(i,j) en indiquant le port de sortie i est occupé pour la période comprise entre $t_{a1}$+($t_{a0}$+T1-$t_{a1}$) et $t_{d1}$, avec $t_{d1}$ = $t_{a1}$+($t_{a0}$+T1-$t_{a1}$)+T2. On obtient la table d'occupation suivante :

$$T(i,j) = \{(t_{a0}, t_{a0}+T1);(t_{a0}+T1, t_{a0}+T1+T2)\}.$$

Il est à noter que, contrairement aux premier et deuxième exemples illustrés ci-dessus, les flots de données optiques sont programmés sur le port de sortie i les unes à la suite des autres, sans qu'il n'y ait de période temporelle non occupée entre deux flots de données optiques.

À la date $t_{d0}$ = $t_{a0}$+T1 (fin du premier flot de données optiques), le contrôleur met à jour la table d'occupation T(i,j) en effaçant la réservation qui avait été faite pour le premier flot de données optiques. On obtient alors la table d'occupation suivante :

$$T(i,j) = \{(t_{a0}+T1, t_{a0}+T1+T2)\}.$$

À la date $t = t_{a2}$, le capteur de détection 110 détecte l'arrivée d'un troisième flot de données optiques sur la longueur d'onde j du port d'entrée 3, de durée réelle T3. Le contrôleur 150 consulte la table d'occupation T(i,j) et constate que le port de sortie i est actuellement occupé, mais qu'il sera libre après la date $t_{a0}$+T1+T2. Le contrôleur 150 configure donc la ligne à retard VDL(3,j) avec un retard de durée égale à $t_{d1}$-$t_{a2}$, soit $t_{a0}$+T1+T2-$t_{a2}$. Le contrôleur 150 met à jour ensuite la table d'occupation T(i,j) en indiquant que le port de sortie i est occupé pour la période comprise entre $t_{a2}$+($t_{a0}$+T1+T2-$t_{a2}$) et $t_{d2}$, avec $t_{d2}$ = $t_{a0}$+T1+T2+T3. On obtient la table d'occupation suivante :

$$T(i,j) = \{(t_{a0}+T1, t_{a0}+T1+T2);(t_{a0}+T1+T2, t_{a0}+T1+T2+T3)\}.$$

À la date $t = t_{a3}$ le capteur de détection 110 détecte l'arrivée d'un quatrième flot de données optiques sur la longueur d'onde j du port 4 d'entrée, de durée réelle T4. Le contrôleur 150 consulte la table d'occupation T(i,j) et constate que le port de sortie i est actuellement occupé, mais qu'il sera libre après la date $t_{a0}$+T1+T2+T3. Le contrôleur 150 configure donc la ligne à retard VDL(4,j) avec un retard de durée égale à $t_{a0}$+T1+T2+T3-$t_{a3}$. Le contrôleur 150 met à jour ensuite la table d'occupation T(i,j) en indiquant que le port de sortie i est également occupé pour la période comprise entre $t_{a3}$+ ($t_{a0}$+T1+T2+T3-$t_{a3}$) et $t_{d3}$, avec $t_{d3}$ = $t_{a0}$+ T1+T2+T3+T4. On obtient la table d'occupation suivante :

$$T(i,j) = \{(t_{a0}+T1, t_{a0}+T1+T2);(t_{a0}+T1+T2, t_{a0}+T1+T2+T3);$$
$$(t_{a0}+T1+T2+T3, t_{a0}+T1+T2+T3+T4)\}.$$

Il convient de noter que, du fait de l'absence de paquet de contrôle, le noeud ne connaît pas, a priori, la durée d'un flot de données optiques donné. Comme pour l'exemple des figures 3 et 4, on peut considérer par exemple qu'un flot de données optiques reçu par un noeud a une durée maximale prédéterminée (T). Dans ce cas, il s'agit donc d'appliquer à chaque flot de données optiques reçu (en cas d'une éventuelle collision) un retard de durée fixe T. Il est également possible de connaître la durée réelle d'un flot de données optiques reçu par un noeud. Cette durée peut être déterminée :

- soit au moyen d'une information relative à la durée du flot de données optiques codée dans un en-tête du flot de données optiques ;
- soit au moyen d'un champ délimiteur de fin de flot de données optiques ;
- soit au moyen d'une détection de l'enveloppe du flot de données optiques ;
- soit au moyen d'une détection d'absence prolongée de lumière par le capteur de détection 110 de flot de données optiques.

Dans une autre variante de réalisation, on prévoit une table d'occupation contenant uniquement les dates de fin d'occupation des ports de sortie, ce qui évite d'enregistrer un début de réception de flot de données optiques. Néanmoins, afin d'affiner le calcul de durée à appliquer par les lignes à retard variables et ainsi d'éviter la présence de période temporelle de non-occupation entre chaque réservation, il est préférable que la table d'occupation comprenne les dates de début de réception de flot de données optiques.

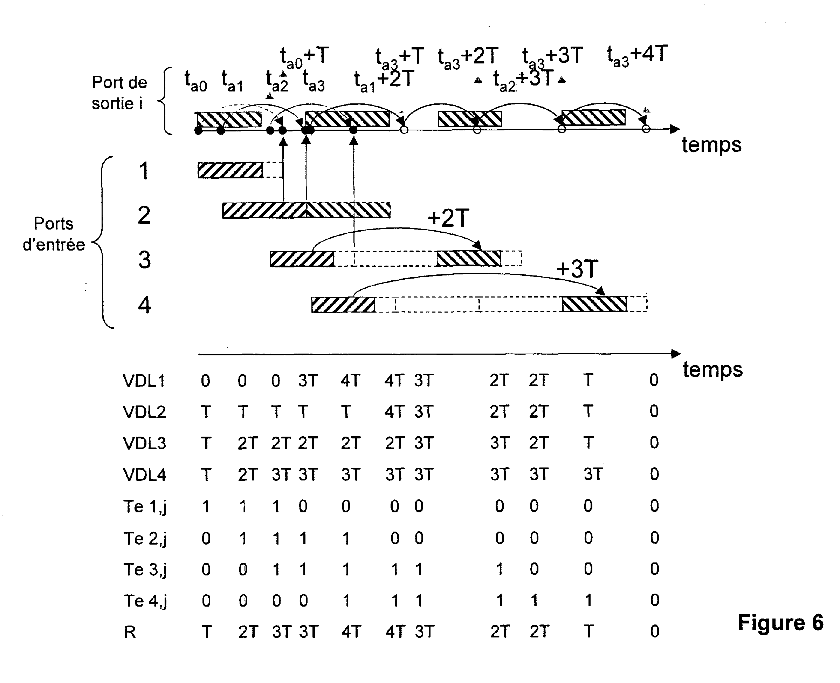

La **figure 6** représente un exemple de diagramme illustrant une méthode de gestion de collisions dans le domaine temporel, par utilisation d'une table d'occupation de lignes à retard, selon un second mode de réalisation de l'invention.

À la différence du mode de réalisation particulier décrit aux figures 3 à 5 qui repose sur une table d'occupation des ports de sortie d'un noeud, le mode de réalisation de la figure 6 repose sur une table d'occupation de lignes à retard correspondant aux ports d'entrée pour chaque longueur d'onde. Le procédé de commutation concerne alors le groupe de lignes à retard ou de ports d'entrée qui appartiennent au même arbre de routage (dans l'exemple du noeud relais 100, l'occupation d'une ligne à retard correspond exactement à l'occupation du port d'entrée pour une longueur d'onde donnée).

Lors de l'initialisation du procédé de commutation, la table d'occupation est par défaut vide (Te(i,j) = { }) ; les lignes à retard variable sont configurées avec une durée nulle VDL(i,j) = 0 ; une variable de retard R définie pour l'arbre contient également une valeur nulle R=0.

On considère dans cet exemple que chaque flot de données optiques reçu par le noeud relais 100 a une durée maximale prédéterminée T.

À la date t = $t_{a0}$, le capteur de détection 110 détecte l'arrivée d'un premier flot de données optiques sur la longueur d'onde j du port d'entrée 1. Le contrôleur 150 consulte la table d'occupation des lignes à retard, constate que celle-ci est vide. Il laisse donc passer le flot de données optiques sans appliquer de retard puisque la ligne à retard variable est configurée avec VDL(1,j) = 0 et configure toutes les lignes à retard variable inoccupées avec un retard de durée égale à T, soit VDL(2,j) = VDL(3,j) = VDL(4,j) = T. Le contrôleur 150 met à jour la variable R en lui faisant prendre la valeur T. Le contrôleur 150 programme en outre une requête de mise à jour de VDL(1,j) et de la variable R à la date $t_{a0}$+T. Le contrôleur 150 indique que le port d'entrée 1 est occupé : Te(1,j)=1 (c'est-à-dire que la ligne à retard correspondante est occupée).

À la date t = $t_{a1}$, le capteur de détection détecte l'arrivée d'un deuxième flot de données optiques sur la longueur d'onde j du port 2. La ligne à retard variable VDL(2,j) étant configuré à T, le flot de données optiques est donc retardé d'une durée égale à T avant d'atteindre le commutateur optique. À la date $t_{a1}$ le contrôleur configure toutes les lignes à retard variable inoccupées avec un retard d'une durée incrémentée de T, soit VDL(3,j) = VDL(4,j) = 2T, puis met à jour la variable R en lui faisant prendre la valeur 2T. Le contrôleur indique dans la table d'occupation que le port d'entrée 2 est occupé : Te(2,j) =1. Il programme une requête de mise à jour de VDL(2,j) à la date $t_{a1}$+2T et remplace la date courante de mise à jour de la variable R (anciennement $t_{a0}$+T) avec la date $t_{a1}$+T.

À la date t = $t_{a2}$, le capteur de détection détecte l'arrivée d'un troisième flot de données optiques sur la longueur d'onde j du port 3. La ligne à retard variable VDL(3,j) étant configurée à 2T dans la table d'occupation, le flot de données optiques est donc retardé d'une durée égale à 2T avant d'atteindre le commutateur optique. À la date t = $t_{a2}$, le contrôleur configure toutes les lignes à retard variable inoccupées avec un retard d'une durée incrémentée de T, VDL(4,j) = 3T, puis met à jour la variable R en lui faisant prendre la valeur 3T.

Le contrôleur indique dans la table d'occupation que le port d'entrée 3 est occupé : Te(3,j) =1. Il programme une requête de mise à jour de VDL(3,j) à la date $t_{a2}$+3T et remplace la date courante de mise à jour de la variable R (anciennement $t_{a1}$+T) avec la date $t_{a2}$+T.

À la date $t_{a0}$+T (fin du premier flot de données optiques), le contrôleur 150 met à jour la table d'occupation en mettant le port d'entrée Te(1,j) à 0 et la ligne à retard variable VDL(1,j) à la valeur courante de la variable R (R = 3T). Ainsi, si un autre flot de données optiques arrivait à cet instant sur le port d'entrée 1, il pourrait être programmé pour subir un retard tel qu'il puisse être transmis à la suite des autres flots de données optiques sur le port de sortie du noeud relais 100.

À la date t = $t_{a3}$, le capteur de détection détecte l'arrivée d'un quatrième flot de données optiques sur la longueur d'onde j du port d'entrée 4.

La ligne à retard variable VDL(4,j) étant configurée à 3T, le flot de données optiques est donc retardé d'une durée égale à 3T avant d'atteindre le commutateur optique. Puis, le contrôleur 150 configure toutes les lignes à retard variable inoccupées avec un retard d'une durée incrémentée de T, puis met à jour la variable R en lui faisant prendre la valeur 4T.

Le contrôleur 150 indique dans la table d'occupation que le port d'entrée 4 est occupé: Te(4,j) =1. Il programme une requête de mise à jour de VDL4 à la date $t_{a3}$+4T et remplace la date courante de mise à jour de la variable R avec la date $t_{a3}$+T.

À la date t = $t_{a1}$ +2T, le contrôleur 150 met à jour la durée du retard de la ligne à retard variable VDL(2,j) à la valeur courante de la variable R (R = 4T).

À la date t = $t_{a3}$+T, les valeurs des lignes à retard variable libres sont décrémentées de la valeur T, ainsi que la variable R (R = 3T). La prochaine mise à jour de R est programmée à la date $t_{a3}$+2T.

À la date t = $t_{a3}$ +2T, les valeurs des lignes à retard variable libres sont décrémentées de la valeur T, ainsi que la variable R (R = 2T). La prochaine mise à jour de la variable R est programmée à la date $t_{a3}$+3T.

À la date t = $t_{a2}$ +3T, le contrôleur 150 met à jour la durée du retard de la ligne à retard variable VDL(3,j) à la valeur courante de la variable R (R = 2T).

À la date t = $t_{a3}$ +3T, les valeurs des lignes à retard variable libres sont décrémentées de la valeur T, ainsi que la variable R (R = T). La prochaine mise à jour de la variable R est programmée à la date t = $t_{a3}$+4T.

À la date $t_{a3}$+4T, les valeurs des lignes à retard variable libres sont décrémentées de la valeur T, ainsi que la variable R (R = 0). La table d'occupation est revenue à l'état initial et aucune mise à jour n'est à programmer.

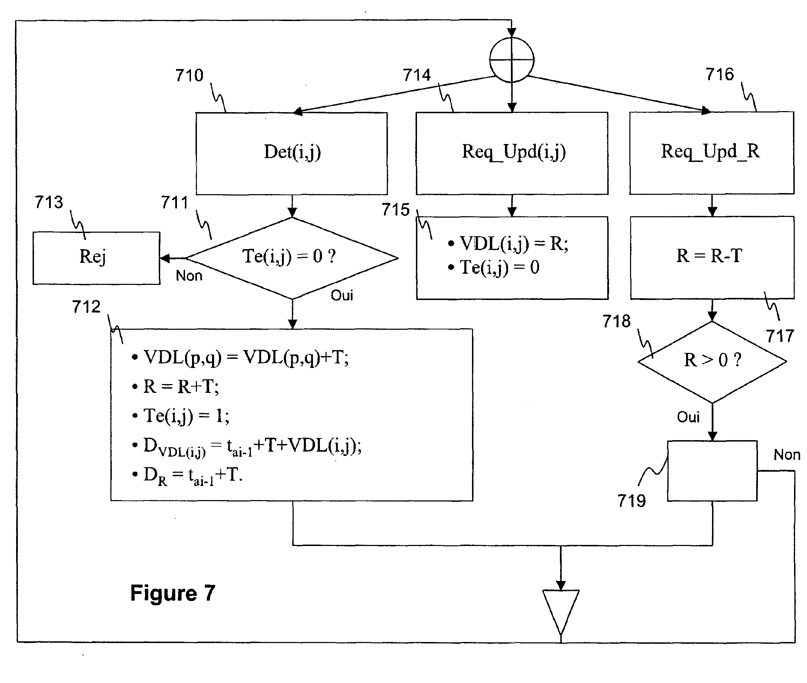

La **figure 7** représente un organigramme d'un algorithme de mise en oeuvre d'une méthode de détermination de retards variables dans le cadre du second mode de réalisation décrit en relation avec la figure 6.

À l'étape 710, le contrôleur 150 détecte l'arrivée d'un flot de données optiques, de longueur d'onde j, sur le port d'entrée i à une date $t_{ai-1}$.

Le contrôleur 150 effectue ensuite un test à l'étape 711 pour savoir si la ligne à retard variable VDL(i,j) considérée est libre ou occupée par un ou plusieurs flots de données optiques précédents en consultant la table Te(i,j).

Si la ligne à retard variable est occupée (Te(i,j) = 1), le contrôleur 150 passe à l'étape 713 dans laquelle il décide de rejeter le flot de données optiques détecté sur le port d'entrée i.

Si la ligne à retard variable est libre (Te(i,j) = 0), le contrôleur 150 passe à l'étape 712. Dans cette étape, le contrôleur 150 configure tout d'abord chaque ligne à retard VDL(p,q) libre tel que :

$$VDL(p,q) = VDL(p,q)+T$$

Puis, il configure la variable de retard R tel que :

$$R = R+T$$

Et il configure la table d'occupation pour la ligne à retard correspondant au flot en cours tel que :

$$Te(i,j) = 1$$

Le contrôleur 150 programme ensuite la date de mise à jour de la ligne à retard VDL(i,j) à:

$$D_{VDL(i,j)} = t_{ai-1}+T+VDL(i,j)$$

Le contrôleur 150 programme également la date de mise à jour de la variable R à $D_R = t_{ai-1}$+T.

Sur requête de mise à jour de la ligne à retard VDL(i,j) à l'étape 714, le contrôleur 750 effectue la mise à jour à l'étape 715 de VDL(i,j) avec la valeur courante de la variable R et la mise à jour de la table d'occupation Te(i,j) avec la valeur 0.

Sur requête de mise à jour de la variable de retard R à une date t à l'étape 716, le contrôleur 150 décrémente le retard des lignes à retard variable libres d'une valeur T (sauf si ce retard est déjà nul), ainsi que la variable R (R = R-T) (sauf si la variable R est déjà nulle) à l'étape 717.

Le contrôleur 115 effectue ensuite un test à l'étape 718 pour savoir si la variable de retard R est strictement supérieure à 0.

Si ce n'est pas le cas (R = 0), alors cela signifie que la table d'occupation est revenue à l'état initial et aucune mise à jour n'est à programmer.

Si c'est le cas (R > 0), alors une date de mise à jour de la variable R est programmée à une date t +T au cours d'une étape 719.

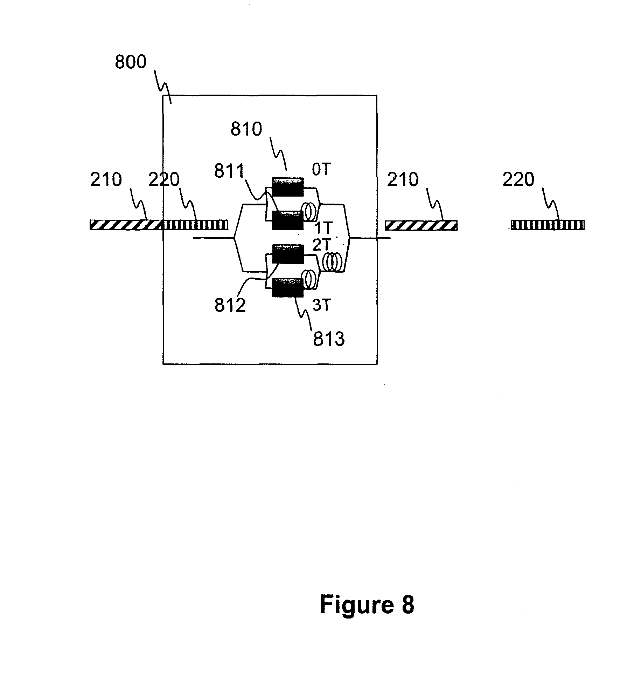

La **figure 8** illustre un exemple d'une ligne à retard variable 800 pouvant être implémentée dans un noeud relais 100, selon un mode de réalisation particulier de l'invention.

La ligne à retard variable 800 comprend plus particulièrement une pluralité de branches 810, 811, 812, 813 en parallèle, chaque branche 810, 811, 812, 813 permettant d'appliquer un retard distinct de durée, respectivement 0, T, 2T, 3T. Lorsque la ligne à retard variable 800 est configurée pour un flot de données optiques donné 220, le contrôleur vérifie qu'au moins une des branches 810, 811, 812, 813 permet d'appliquer le retard qui été déterminé pour retarder ce flot de données optiques donné 220.

Si c'est le cas, le contrôleur sélectionne la branche permettant d'appliquer le retard déterminé, pour le flot de données optiques donné, puis bloque la branche sélectionnée dès que la fin du flot de données optiques donné a passé l'entrée de la branche de façon à bloquer la ligne à retard pour tout autre flot (par exemple le flot 210).

Si ce n'est pas le cas, le contrôleur rejette le flot de données optiques donné (par exemple en bloquant toutes les branches).

À titre d'exemple, si un retard de durée T est appliqué à un premier flot de données optiques 220, un retard de durée 2T peut être programmé pour un deuxième flot de données optiques 210 à condition que la durée du deuxième flot de données optiques soit strictement inférieure à la durée T pour éviter une collision en sortie de la ligne à retard 800. C'est pourquoi, le contrôleur effectue un verrouillage de la branche 811 sélectionnée dès que le premier flot de données optiques 220 en est sorti.

Il convient de noter que cet exemple de ligne à retard variable est compatible avec chacun des premier et second modes de réalisation décrits plus haut en relation avec les figures 3, 4, 5 et 6.

On peut considérer par exemple qu'au-delà d'une durée égale à 3T, on ne peut plus appliquer de retard à l'aide de la ligne à retard. Un retard de durée égale à 4T n'étant donc pas réalisable et le contrôleur 150 décide d'effacer le flot de données optiques correspondant.

On peut également prévoir, dans un mode de réalisation particulier, que plusieurs ports d'entrée (par exemple les deux ports d'entrée 111 et 113) sont reliés au commutateur optique 140, pour une ou plusieurs longueurs d'onde, via une seule chaîne de traitement commune, cette chaîne de traitement commune comprenant une ligne à retard variable VDL partagée par les différents ports d'entrée.

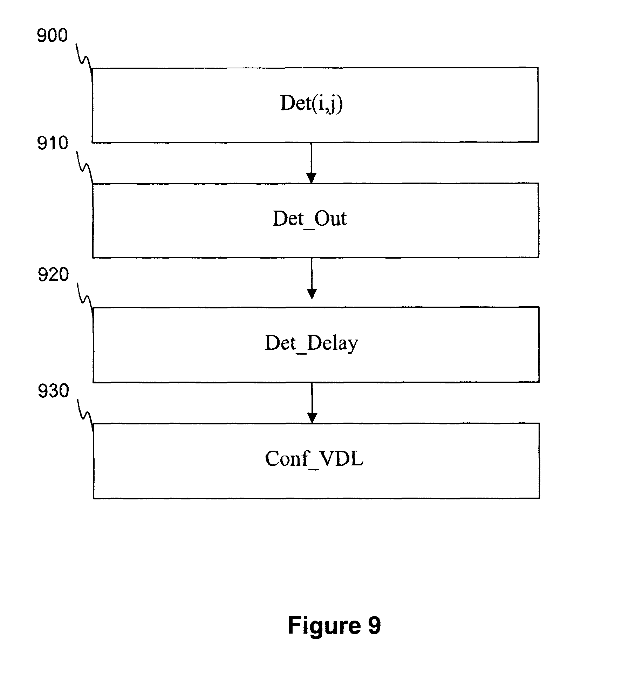

La **figure 9** présente un organigramme d'un algorithme de mise en oeuvre du procédé de commutation selon un mode de réalisation particulier de l'invention.

Dans une étape 900, le noeud relais 100 détecte, au moyen d'un capteur de détection 110, l'arrivée d'un flot de données optiques, sur une longueur d'onde donnée, par un port d'entrée donné. C'est le capteur de détection 110 qui permet au noeud relais 100 de connaître la longueur d'onde du flot de données optiques détectée et de déterminer la chaîne de traitement mise à contribution pour gérer une éventuelle collision avec un flot de données optiques précédent, dans le domaine temporel.

Dans une étape 910, le noeud relais 100 détermine le port de sortie à utiliser pour le flot de données optiques détecté à l'aide d'une politique d'acheminement prédéterminée dont le principe est décrit plus haut en relation avec les figures 1 et 2.

Dans une étape 920, le noeud relais 100 détermine ensuite une durée de retard variable à appliquer au flot de données optiques courant par la chaîne de traitement déterminée, pour éviter une éventuelle collision sur le port de sortie déterminé, entre le flot de données optiques courant et un ou plusieurs flot(s) de données optiques précédents.

Dans une étape 930, le noeud relais 100 configure la ligne à retard variable de la chaîne de traitement déterminée de manière à appliquer la durée de retard variable déterminée à l'étape 920.

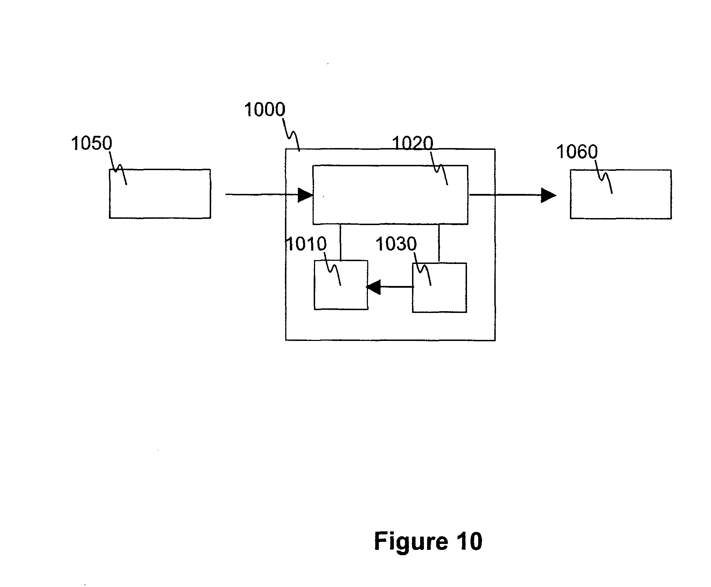

La **figure 10** présente la structure simplifiée d'un noeud relais 1000 mettant en oeuvre le procédé de commutation selon l'invention (par exemple le mode de réalisation particulier décrit ci-dessus en relation avec la figure 9).

Ce noeud relais 1000 comprend une mémoire RAM 1030, une unité de traitement 1020, équipée par exemple d'un processeur, et pilotée par un programme d'ordinateur stocké dans une mémoire ROM 1010. À l'initialisation du procédé, les instructions de code du programme d'ordinateur sont par exemple chargées dans la mémoire RAM 1030 avant d'être exécutées par le processeur de l'unité de traitement 1010.

L'unité de traitement 1010 reçoit en entrée une information 1050 lui indiquant la détection d'un flot de données optiques sur un port d'entrée i et une longueur d'onde j. Le processeur de l'unité de traitement 1020 traite l'information 1050 et génère en sortie une information 1060 de configuration de ligne à retard variable, selon les instructions du programme.

Il convient de noter que cette figure 10 illustre seulement une manière particulière, parmi plusieurs possibles, de réaliser les différents algorithmes détaillés ci-dessus, en relation avec les figures 7 et 9. En effet, la technique de l'invention se réalise indifféremment :

- sur une machine de calcul reprogrammable (un ordinateur PC, un processeur DSP ou un microcontrôleur) exécutant un programme comprenant une séquence d'instructions ; ou
- sur une machine de calcul dédiée (par exemple un ensemble de portes logiques comme un FPGA ou un ASIC).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

**Revendications**

1. Procédé de commutation d'un flot de données optiques par un noeud (100) d'un réseau optique, apte à commuter des données optiques reçues sur des ports d'entrée (111, 113, 115) vers des ports de sortie (112, 114, 116), le procédé comprenant une étape de gestion de collision comprenant des étapes consistant à, sur détection (900) d'un début de réception d'un flot de données optiques donné sur une longueur d'onde donnée par un port d'entrée donné, le flot donné étant destiné à être traité par une chaîne de traitement donnée (110, 120, 130) comprenant une ligne à retard variable (130) :

   - déterminer (910) une ressource du noeud,
   - consulter une table d'occupation de ladite ressource, ladite table d'occupation indiquant si au moins un éventuel flot précédent utilise ladite ressource ;
   - déterminer (920) un retard à appliquer par la chaîne de traitement donnée, pour éviter une collision entre le flot donné et ledit au moins un éventuel flot précédent;
   - configurer (930) la ligne à retard variable de la chaîne de traitement donnée, pour qu'elle applique le retard déterminé,
   le procédé étant **caractérisé en ce que** ladite étape consistant à déterminer (910) une ressource du noeud est effectuée en fonction d'un capteur (110) ayant détecté le flot donné et en fonction d'une politique d'acheminement prédéterminée telle que, pour la longueur d'onde donnée, qui est commune à des noeuds source et destination du flot donné, l'acheminement dans le réseau optique s'effectue selon un arbre de routage couvrant ledit réseau optique et dont une racine est le noeud destination, ladite ressource appartenant à un groupe comprenant un port de sortie et un ensemble de ports d'entrée.

2. Procédé selon la revendication 1, dans lequel la ressource est un port de sortie et l'étape consistant à déterminer le retard comprend des étapes consistant à :

   - obtenir au moins une information d'occupation à partir de la table d'occupation, indiquant si le port de sortie déterminé est libre ou occupé par au moins un éventuel flot précédent, et dans le cas où il est occupé, une date limite d'occupation ;
   - prendre une durée nulle pour le retard, si le port de sortie déterminé est libre ;
   - détermine une durée non nulle pour le retard, et telle que le flot donné arrive sur le port de sortie à une date postérieure à la date limite d'occupation, si le port de sortie déterminé est occupé ;
   - mettre à jour ladite au moins une information d'occupation, pour indiquer une nouvelle date limite d'occupation.

3. Procédé selon la revendication 1, dans lequel la ressource est un ensemble de ports d'entrée et l'étape consistant à déterminer le retard comprend des étapes consistant à :

   - vérifier que la ligne à retard variable de la chaîne de traitement associée au capteur ayant détecté le flot donné est libre et la marquer en tant qu'occupée ;
   - obtenir au moins une information d'occupation pour chaque ligne à retard variable de chaînes de traitement respectivement associées aux ports d'entrée de l'ensemble, ladite information d'occupation indiquant si la ligne à retard variable est libre ou occupée par au moins un flot précédent ;
   - configurer la ligne à retard variable de chaque autre chaîne de traitement libre avec une nouvelle durée égale à la somme d'une durée courante augmentée d'une durée déterminée.

4. Procédé selon la revendication 3, comprenant en outre des étapes consistant à, en fonction d'une date d'arrivée du flot donné :

   - mettre à jour une variable associée à l'arbre de routage ;
   - modifier la table d'occupation de la ligne à retard variable de la chaîne de traitement associée au capteur ayant détecté le flot donné, afin d'indiquer que ladite ligne à retard est libre, ladite modification étant déclenchée à l'issue d'une durée, mesurée à compter de la date d'arrivée du flot donné, et égale à la somme de la valeur de la variable et d'une durée représentant la durée du flot donné ;

- configurer la ligne à retard variable de la chaîne de traitement associée au capteur ayant détecté le flot donné avec la valeur de la variable.

**5.** Procédé selon l'une quelconque des revendications 1 à 4, dans lequel la détection d'un début de réception d'un flot de données optiques donné sur une longueur d'onde donnée par un port d'entrée donné est obtenue par une solution appartenant à un groupe de solutions comprenant la mise en oeuvre d'une détection d'enveloppe et la détection d'un champ délimiteur de début accolé au flot.

**6.** Procédé selon l'une quelconque des revendications 1 à 5, dans lequel la détermination d'une durée non nulle pour le retard comprend une étape consistant à déterminer la durée du flot donné, et dans lequel la détermination de la durée du flot donné est obtenue par la détection d'une fin de réception d'un flot de données optiques donné sur une longueur d'onde donnée par un port d'entrée donné, ladite détection étant elle-même obtenue par une solution appartenant à un groupe de solutions comprenant la mise en oeuvre d'une détection d'enveloppe et la détection d'un champs délimiteur de fin accolé au flot.

**7.** Procédé selon l'une quelconque des revendications 1 à 6, **caractérisé en ce qu'**il comprend une étape consistant à vérifier que la ligne à retard variable de la chaîne de traitement associée au capteur ayant détecté le flot donné est vide, et **en ce que**, en cas de vérification positive, l'étape de gestion de collision est effectuée, sinon le flot de données optiques donné est rejeté.

**8.** Produit programme d'ordinateur, **caractérisé en ce qu'**il comprend des instructions de code de programme pour la mise en oeuvre du procédé selon au moins une des revendications 1 à 7, lorsque ledit programme est exécuté sur un ordinateur.

**9.** Moyen de stockage lisible par ordinateur, stockant un programme d'ordinateur comprenant un jeu d'instructions exécutables par un ordinateur pour mettre en oeuvre l'étape consistant à déterminer un deuxième retard, comprise dans le procédé selon au moins une des revendications 1 à 7.

**10.** Noeud (100) d'un réseau optique, apte à commuter des données optiques reçues sur des ports d'entrée (111, 113, 115) vers des ports de sortie (112, 114, 116), le noeud comprenant des moyens de gestion de collision comprenant les moyens suivants, activés sur détection d'un début de réception d'un flot de données optiques donné sur une longueur d'onde donnée par un port d'entrée donné, le flot donné étant destiné à être traité par une chaîne de traitement donnée (110, 120, 130) comprenant une ligne à retard variable (130) :

- des moyens pour déterminer une ressource du noeud ;
- des moyens pour consulter une table d'occupation de ladite ressource, ladite table d'occupation indiquant si au moins un éventuel flot précédent utilise ladite ressource ;
- des moyens pour déterminer un retard à appliquer par la chaîne de traitement donnée, pour éviter une collision entre le flot donné et ledit au moins un éventuel flot précédent;
- des moyens pour configurer la ligne à retard variable de la chaîne de traitement donnée, pour qu'elle applique le retard déterminé ;
le noeud étant **caractérisé en ce que** lesdits moyens pour déterminer une ressource du noeud tiennent compte d'un capteur (110) ayant détecté le flot donné et d'une politique d'acheminement prédéterminée telle que, pour la longueur d'onde donnée, qui est commune à des noeuds source et destination du flot donné, l'acheminement dans le réseau optique s'effectue selon un arbre de routage couvrant ledit réseau optique et dont une racine est le noeud destination, ladite ressource appartenant à un groupe comprenant un port de sortie et un ensemble de ports d'entrée.

**11.** Noeud selon la revendication 10, **caractérisé en ce qu'**il comprend en outre les moyens suivants, activés sur détection d'une demande de transmission vers un noeud destination d'un flot de données local pour lequel le noeud local est aussi noeud source:

- des moyens pour déterminer le port de sortie à utiliser pour la rafale locale, en fonction de ladite politique de commutation prédéterminée ;
- des moyens d'obtention d'au moins une information d'occupation, indiquant si le port de sortie déterminé est libre ou occupé par au moins une rafale précédente, et dans le cas où il est occupé, une date limite d'occupation ;
- des moyens pour déterminer une plage temporelle dans laquelle le port de sortie déterminée est libre pour transmettre la rafale locale, en fonction de ladite au moins une information d'occupation ;

- des moyens pour mettre à jour ladite au moins une information d'occupation, pour indiquer une nouvelle date limite d'occupation postérieure tenant compte d'une réservation du port de sortie déterminé pendant ladite plage temporelle ;
- des moyens pour insérer le flot local sur ledit port de sortie déterminé, pendant ladite plage temporelle.

12. Noeud selon l'une quelconque des revendications 10 et 11, **caractérisé en ce que**, pour la détection d'un début de réception d'un flot de données optiques donné sur une longueur d'onde donnée par un port d'entrée donné, il comprend des moyens pour détecter une enveloppe et/ou des moyens pour détecter un champ délimiteur de début accolé au flot.

13. Système de commutation de flots de données optiques dans un réseau optique comprenant une pluralité de noeuds (100), **caractérisé en ce que** chaque noeud de ladite pluralité est selon l'une quelconque des revendications 10 à 12.

**Patentansprüche**

1. Verfahren zur Vermittlung eines Flusses optischer Daten durch einen Knoten (100) eines optischen Netzes, der an Eingangsports (111, 113, 115) empfangene optische Daten zu Ausgangsports (112, 114, 116) vermitteln kann, wobei das einen Schritt der Kollisionsverwaltung enthaltende Verfahren Schritte enthält, die bei Erfassung (900) eines Empfangsbeginns eines gegebenen Flusses optischer Daten auf einer gegebenen Wellenlänge durch einen gegebenen Eingangsport, wobei der gegebene Fluss dazu bestimmt ist, von einer gegebenen Verarbeitungskette (110, 120, 130) verarbeitet zu werden, die eine variable Verzögerungsleitung (130) enthält, darin bestehen:

   - eine Ressource des Knotens zu bestimmen (910);
   - eine Belegungstabelle der Ressource zu konsultieren, wobei die Belegungstabelle angibt, ob mindestens ein möglicher vorhergehender Fluss die Ressource nutzt;
   - eine durch die gegebene Verarbeitungskette anzuwendende Verzögerung zu bestimmen (920), um eine Kollision zwischen dem gegebenen Fluss und dem mindestens einen möglichen vorhergehenden Fluss zu vermeiden;
   - die variable Verzögerungsleitung der gegebenen Verarbeitungskette so zu konfigurieren (930), dass sie die bestimmte Verzögerung anwendet;
   wobei das Verfahren **dadurch gekennzeichnet ist, dass** der aus der Bestimmung (910) einer Ressource des Knotens bestehende Schritt abhängig davon, dass ein Sensor (110) den gegebenen Fluss erfasst hat, und abhängig von einer derartigen vorbestimmten Weiterleitungspolitik durchgeführt wird, dass für die gegebene Wellenlänge, die Quell- und Zielknoten des gegebenen Flusses gemeinsam ist, die Weiterleitung im optischen Netz gemäß einem Routing-Baum erfolgt, der das optische Netz abdeckt und von dem eine Wurzel der Zielknoten ist, wobei die Ressource zu einer Gruppe gehört, die einen Ausgangsport und eine Einheit von Eingangsports enthält.

2. Verfahren nach Anspruch 1, wobei die Ressource ein Ausgangsport ist, und der aus der Bestimmung der Verzögerung bestehende Schritt Schritte enthält, die darin bestehen:

   - mindestens eine Belegungsinformation ausgehend von der Belegungstabelle, die angibt, ob der bestimmte Ausgangsport frei oder von mindestens einem möglichen vorhergehenden Fluss belegt ist, und falls er belegt ist, eine Belegungsfrist zu erhalten;
   - eine Dauer Null für die Verzögerung zu nehmen, wenn der bestimmte Ausgangsport frei ist;
   - eine Dauer ungleich Null für die Verzögerung und derart zu bestimmen, dass der gegebene Fluss am Ausgangsport zu einem Zeitpunkt nach der Belegungsfrist ankommt, wenn der bestimmte Ausgangsport belegt ist;
   - die mindestens eine Belegungsinformation zu aktualisieren, um eine neue Belegungsfrist anzugeben.

3. Verfahren nach Anspruch 1, wobei die Ressource eine Einheit von Eingangsports ist, und der aus der Bestimmung der Verzögerung bestehende Schritt Schritte enthält, die darin bestehen:

   - zu überprüfen, ob die dem Sensor, der den gegebenen Fluss erfasst hat, zugeordnete variable Verzögerungsleitung der Verarbeitungskette frei ist, und sie als belegt zu markieren;
   - mindestens eine Belegungsinformation für jede variable Verzögerungsleitung von Verarbeitungsketten, die je den Eingangsports der Einheit zugeordnet sind, zu erhalten, wobei die Belegungsinformation angibt, ob die variable Verzögerungsleitung frei oder von mindestens einem vorhergehenden Fluss belegt ist;

- die variable Verzögerungsleitung jeder anderen freien Verarbeitungskette mit einer neuen Dauer gleich der Summe einer laufenden Dauer erhöht um eine bestimmte Dauer zu konfigurieren.

4. Verfahren nach Anspruch 3, das außerdem Schritte enthält, die abhängig von einem Ankunftszeitpunkt des gegebenen Flusses darin bestehen:

- eine dem Routing-Baum zugeordnete Variable zu aktualisieren;
- die Belegungstabelle der dem Sensor, der den gegebenen Fluss erfasst hat, zugeordneten variablen Verzögerungsleitung der Verarbeitungskette zu verändern, um anzugeben, dass die Verzögerungsleitung frei ist, wobei die Veränderung am Ende einer Dauer ausgelöst wird, die ausgehend vom Ankunftszeitpunkt des gegebenen Flusses gemessen wird und gleich der Summe des Werts der Variablen und einer Dauer ist, die die Dauer des gegebenen Flusses darstellt;
- die dem Sensor, der den gegebenen Fluss erfasst hat, zugeordnete variable Verzögerungsleitung der Verarbeitungskette mit dem Wert der Variablen zu konfigurieren.

5. Verfahren nach einem der Ansprüche 1 bis 4, wobei die Erfassung eines Empfangsbeginns eines gegebenen Flusses optischer Daten auf einer gegebenen Wellenlänge von einem gegebenen Eingangsport durch eine Lösung erhalten wird, die zu einer Gruppe von Lösungen gehört, welche die Durchführung einer Hüllkurvengleichrichtung und die Erfassung eines an den Fluss angefügten Anfangsbegrenzungsfelds enthält.

6. Verfahren nach einem der Ansprüche 1 bis 5, wobei die Bestimmung einer Dauer ungleich Null für die Verzögerung einen Schritt enthält, der darin besteht, die Dauer des gegebenen Flusses zu bestimmen, und wobei die Bestimmung der Dauer des gegebenen Flusses durch die Erfassung eines Empfangsendes eines gegebenen Flusses optischer Daten auf einer gegebenen Wellenlänge durch einen gegebenen Eingangsport erhalten wird, wobei die Erfassung selbst durch eine Lösung erhalten wird, die zu einer Gruppe von Lösungen gehört, welche die Durchführung einer Hüllkurvengleichrichtung und die Erfassung eines an den Fluss angefügten Endbegrenzungsfelds enthält.

7. Verfahren nach einem der Ansprüche 1 bis 6, **dadurch gekennzeichnet, dass** es einen Schritt enthält, der darin besteht, zu überprüfen, ob die dem Sensor, der den gegebenen Fluss erfasst hat, zugeordnete variable Verzögerungsleitung der Verarbeitungskette leer ist, und dass im Fall einer positiven Überprüfung der Schritt der Kollisionsverwaltung durchgeführt wird, ansonsten der gegebene Fluss optischer Daten zurückgewiesen wird.

8. Computerprogrammprodukt, **dadurch gekennzeichnet, dass** es Programmcodeanweisungen für die Durchführung des Verfahrens nach mindestens einem der Ansprüche 1 bis 7 enthält, wenn das Programm in einem Computer ausgeführt wird.

9. Computerlesbare Speichereinrichtung, die ein Computerprogramm speichert, das einen Satz von von einem Computer ausführbaren Anweisungen enthält, um den Schritt durchzuführen, der darin besteht, eine zweite Verzögerung zu bestimmen, der in dem Verfahren nach mindestens einem der Ansprüche 1 bis 7 enthalten ist.

10. Knoten (100) eines optisches Netzes, der an Eingangsports (111, 113, 115) empfangene optische Daten zu Ausgangsports (112, 114, 116) vermitteln kann, wobei der Knoten Kollisionsverwaltungseinrichtungen enthält, die die folgenden Einrichtungen enthalten, die bei Erfassung eines Empfangsbeginns eines gegebenen Flusses optischer Daten auf einer gegebenen Wellenlänge durch einen gegebenen Eingangsport aktiviert werden, wobei der gegebene Fluss dazu bestimmt ist, von einer gegebenen Verarbeitungskette (110, 120, 130) verarbeitet zu werden, die eine variable Verzögerungsleitung (130) enthält:

- Einrichtungen zur Bestimmung einer Ressource des Knotens;
- Einrichtungen zum Konsultieren einer Belegungstabelle der Ressource, wobei die Belegungstabelle angibt, ob mindestens ein möglicher vorhergehender Fluss die Ressource benutzt;
- Einrichtungen zur Bestimmung einer durch die gegebene Verarbeitungskette anzuwendenden Verzögerung, um eine Kollision zwischen dem gegebenen Fluss und dem mindestens einen möglichen vorhergehenden Fluss zu vermeiden;
- Einrichtungen, um die variable Verzögerungsleitung der gegebenen Verarbeitungskette so zu konfigurieren, dass sie die bestimmte Verzögerung anwendet;
wobei der Knoten **dadurch gekennzeichnet ist, dass** die Einrichtungen zur Bestimmung einer Ressource des Knotens einen Sensor (110), der den gegebenen Fluss erfasst hat, und eine derartige vorbestimmte Weiterleitungspolitik berücksichtigen, dass für die Quell- und Zielknoten des gegebenen Flusses gemeinsame gegebene Wellenlänge die Weiterleitung im optischen Netz gemäß einem Routing-Baum erfolgt, der das optische Netz abdeckt und von dem eine Wurzel der Zielknoten ist, wobei die Ressource zu einer Gruppe gehört, die einen Ausgangsport und eine Einheit von Eingangsports enthält.

**11.** Knoten nach Anspruch 10, **dadurch gekennzeichnet, dass** er außerdem die folgenden Einrichtungen enthält, die bei Erfassung einer Übertragungsanforderung eines lokalen Datenflusses zu einem Zielknoten aktiviert werden, für den der lokale Knoten auch Quellknoten ist:

- Einrichtungen zur Bestimmung des für den lokalen Burst zu verwendenden Ausgangsports abhängig von der vorbestimmten Vermittlungspolitik;
- Einrichtungen zum Erhalt mindestens einer Belegungsinformation, die angibt, ob der bestimmte Ausgangsport frei oder von mindestens einem vorhergehenden Burst belegt ist, und falls er belegt ist, eine Belegungsfrist angibt;
- Einrichtungen, um einen Zeitbereich zu bestimmen, während dem der bestimmte Ausgangsport frei ist, um den lokalen Burst zu übertragen, abhängig von der mindestens einen Belegungsinformation;
- Einrichtungen, um die mindestens eine Belegungsinformation zu aktualisieren, um eine neue spätere Belegungsfrist anzugeben, die eine Reservierung des bestimmten Ausgangsports während des Zeitbereichs berücksichtigt;
- Einrichtungen zum Einfügen des lokalen Flusses in den bestimmten Ausgangsport während des Zeitbereichs.

**12.** Knoten nach einem der Ansprüche 10 und 11, **dadurch gekennzeichnet, dass** er für die Erfassung eines Empfangsbeginns eines gegebenen Flusses optischer Daten auf einer gegebenen Wellenlänge von einem gegebenen Eingangsport Einrichtungen, um eine Hüllkurve zu erfassen, und/oder Einrichtungen enthält, um ein an den Fluss angefügtes Anfangsbegrenzungsfeld zu erfassen.

**13.** Vermittlungssystem von Flüssen optischer Daten in einem optischen Netz, das eine Vielzahl von Knoten (100) enthält, **dadurch gekennzeichnet, dass** jeder Knoten der Vielzahl nach einem der Ansprüche 10 bis 12 ist.

**Claims**

**1.** Method for switching an optical data stream by a node (100) of an optical network, able to switch optical data received on input ports (111, 113, 115) to output ports (112, 114, 116), the method comprising a collision management step comprising steps consisting in, on detection (900) of a start of reception of a given optical data stream on a given wavelength by a given input port, the given stream being intended to be processed by a given processing chain (110, 120, 130) comprising a variable delay line (130):

- determining (910) a resource of the node;
- consulting an occupancy table for said resource, said occupancy table indicating whether at least one possible previous stream uses said resource;
- determining (920) a delay to be applied by the given processing chain, so as to avoid a collision between the given stream and said at least one possible previous stream;
- configuring (930) the variable delay line of the given processing chain, so that it applies the determined delay, the method being **characterized in that** said step consisting in determining (910) a resource of the node is performed as a function of a sensor (110) that has detected the given stream and as a function of a predetermined routing policy such that, for the given wavelength, which is common to source and destination nodes of the given stream, the routing in the optical network is performed according to a routing tree covering said optical network and a root of which is the destination node, said resource belonging to a group comprising an output port and a set of input ports.

**2.** Method according to Claim 1, in which the resource is an output port and the step consisting in determining the delay comprises steps consisting in:

- obtaining at least one item of occupancy information on the basis of the occupancy table, indicating whether the determined output port is free or occupied by at least one possible previous stream, and in the case where it is occupied, an occupancy limit date;
- taking a zero duration for the delay, if the determined output port is free;
- determining a non-zero duration for the delay, and such that the given stream arrives at the output port at a date posterior to the occupancy limit date, if the determined output port is occupied;

- updating said at least one item of occupancy information, so as to indicate a new occupancy limit date.

3.  Method according to Claim 1, in which the resource is a set of input ports and the step consisting in determining the delay comprises steps consisting in:

- verifying that the variable delay line of the processing chain associated with the sensor that has detected the given stream is free and marking it as being occupied;
- obtaining at least one item of occupancy information for each variable delay line of processing chains respectively associated with the input ports of the set, said item of occupancy information indicating whether the variable delay line is free or occupied by at least one previous stream;
- configuring the variable delay line of each other free processing chain with a new duration equal to the sum of a current duration increased by a determined duration.

4.  Method according to Claim 3, furthermore comprising steps consisting in, as a function of a date of arrival of the given stream:

- updating a variable associated with the routing tree;
- modifying the occupancy table of the variable delay line of the processing chain associated with the sensor that has detected the given stream, so as to indicate that said delay line is free, said modification being triggered on completion of a duration, measured commencing from the date of arrival of the given stream, and equal to the sum of the value of the variable and of a duration representing the duration of the given stream;
- configuring the variable delay line of the processing chain associated with the sensor that has detected the given stream with the value of the variable.

5.  Method according to any one of Claims 1 to 4, in which the detection of a start of reception of a given optical data stream on a given wavelength by a given input port is obtained by a solution belonging to a group of solutions comprising the implementation of an envelope detection and the detection of a start-delimiter field appended to the stream.

6.  Method according to any one of Claims 1 to 5, in which the determination of a non-zero duration for the delay comprises a step consisting in determining the duration of the given stream, and in which the determination of the duration of the given stream is obtained by the detection of an end of reception of a given optical data stream on a given wavelength by a given input port, said detection being itself obtained by a solution belonging to a group of solutions comprising the implementation of an envelope detection and the detection of an end-delimiter field appended to the stream.

7.  Method according to any one of Claims 1 to 6, **characterized in that** it comprises a step consisting in verifying that the variable delay line of the processing chain associated with the sensor that has detected the given stream is empty, and **in that**, in the case of positive verification, the collision management step is performed, otherwise the given optical data stream is rejected.

8.  Computer program product, **characterized in that** it comprises program code instructions for the implementation of the method according to at least one of Claims 1 to 7, when said program is executed on a computer.

9.  Storage means readable by computer, storing a computer program comprising a suite of instructions executable by a computer so as to implement the step consisting in determining a second delay, included in the method according to at least one of Claims 1 to 7.

10. Node (100) of an optical network, able to switch optical data received on input ports (111, 113, 115) to output ports (112, 114, 116), the node comprising collision management means comprising the following means, activated on detection of a start of reception of a given optical data stream on a given wavelength by a given input port, the given stream being intended to be processed by a given processing chain (110, 120, 130) comprising a variable delay line (130):

- means for determining a resource of the node;
- means for consulting an occupancy table for said resource, said occupancy table indicating whether at least one possible previous stream uses said resource;
- means for determining a delay to be applied by the given processing chain, so as to avoid a collision between the given stream and said at least one possible previous stream;
- means for configuring the variable delay line of the given processing chain, so that it applies the determined delay,
the node being **characterized in that** said means for determining a resource of the node take account of a sensor (110) that has detected the given stream and of a predetermined routing policy such that, for the given wavelength, which is common to source and destination nodes of the given stream, the routing in the optical network is performed according to a routing tree covering said optical network and a root of which is the destination node, said resource belonging to a group comprising an output port and a set of input ports.

11. Node according to Claim 10, **characterized in that** it furthermore comprises the following means, activated on detection of a request for transmission to a destination node of a local data stream for which the local node is also source node:

- means for determining the output port to be used for the local burst, as a function of said predetermined switching policy;
- means for obtaining at least one item of occupancy information, indicating whether the determined output port is free or occupied by at least one previous burst, and in the case where it is occupied, an occupancy limit date;
- means for determining a time slot in which the determined output port is free to transmit the local burst, as a function of said at least one item of occupancy information;
- means for updating said at least one item of occupancy information, so as to indicate a new posterior occupancy limit date taking account of a reservation of the determined output port during said time slot;
- means for inserting the local stream onto said determined output port, during said time slot.

12. Node according to any one of Claims 10 and 11, **characterized in that**, for the detection of a start of reception of a given optical data stream on a given wavelength by a given input port, it comprises means for detecting an envelope and/or means for detecting a start-delimiter field appended to the stream.

13. System for switching optical data streams in an optical network comprising a plurality of nodes (100), **characterized in that** each node of said plurality of nodes is according to any one of Claims 10 to 12.

Figure 1

Figure 2

Figure 3

EP 2 606 655 B1

**Figure 4**

EP 2 606 655 B1

Figure 5

Figure 6

**Figure 7**

Det(i,j)  (710)

Req_Upd(i,j)  (714)

Req_Upd_R  (716)

Rej  (713)

Te(i,j) = 0 ?  (711) — Non → Rej; Oui

- VDL(i,j) = R;
- Te(i,j) = 0  (715)

R = R-T

- VDL(p,q) = VDL(p,q)+T;
- R = R+T;
- Te(i,j) = 1;
- $D_{VDL(i,j)} = t_{ai-1}+T+VDL(i,j)$;
- $D_R = t_{ai-1}+T$.  (712)

R > 0 ?  (717, 718) — Oui; Non

(719)

EP 2 606 655 B1

EP 2 606 655 B1

800

810

811    0T

210    220    1T

210    220

2T

812    3T

813

**Figure 8**

900

Det(i,j)

910

Det_Out

920

Det_Delay

930

Conf_VDL

Figure 9

Figure 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. C.M. QIAO ; M. J.S. YOO.** Optical Burst Switching (OBS) : « A new paradigm for Optical Internet. *Journal of High Speed Networks (JHSN),* vol. 8

- **M. TANCEVSKI.** *Optical routing of asynchronous, variable length packets,* 01 Octobre 2000